# EUROPEAN PATENT APPLICATION

(11) **EP 2 725 488 A1**
(43) Date of publication of application: **30.04.2014**
(21) Application number: 11868240.0
(22) Date of filing: 21.06.2011
(51) Int. Cl.: G06F 9/445, G06F 9/46, G06F 13/10

(54) **INFORMATION PROCESSING DEVICE, VIRTUAL MACHINE MANAGEMENT METHOD AND VIRTUAL MACHINE MANAGEMENT PROGRAM**

(71) Applicant: Fujitsu Limited, Kawasaki-shi, Kanagawa 211-8588 (JP)
(72) Inventor: MIYAUCHI, Keiji, Kawasaki-shi Kanagawa 211-8588 (JP); HASHIMOTO, Shinichi, Kawasaki-shi Kanagawa 211-8588 (JP)
(74) Representative: HOFFMANN EITLE
(86) International application number: PCT/JP2011/064124
(87) International publication number: WO 2012/176277

(57) **Abstract**

Storage devices from which programs are read are switched according to virtual machines.

An interface unit (1c) holds an activation code (3) including information indicating an access destination storage device among storage devices (2, 2a). A storage unit (1d) stores activation codes (3a, 3b), each including information indicating an access destination storage device. A controller (1e) selects, when activating a program on a virtual machine (1a), an activation code according to the virtual machine (1a) from the storage unit (1d), and provides the virtual machine (1a) with the selected activation code, in place of the activation code (3) of the interface unit (1c). A program is read from a storage device according to the selected activation code.

## Description

### Technical Field

The embodiments discussed herein relate to an information processing apparatus, a virtual machine management method, and a virtual machine management program.

### Background Art

Today, in the field of information processing, virtualization technology is used which causes a plurality of virtual computers (also referred to as virtual machines or logical host computers) to operate on a physical computer (also referred to as a physical machine or a physical host computer). Software such as an Operating System (OS) may be executed on respective virtual machines. The physical machine which uses the virtualization technology executes software for managing a plurality of virtual machines.

For example, a type of software referred to as a hypervisor allocates a processing capacity of a CPU (Central Processing Unit) or memory area of a RAM (Random Access Memory) to a plurality of virtual machines as operation resources. In addition, for example, a hypervisor may allocate a processing capacity of an interface such as an NIC (Network Interface Card), an HBA (Host Bus Adapter) or the like, to a plurality of virtual machines as communication resources.

When a computer activates a program such as an OS program, an activation code (also referred to as boot code) may be executed first. According to the code, the computer accesses a predetermined storage device storing the program, reads the program from the storage device, and starts execution thereof.

There has been proposed a boot control method which performs control such that a management server sets a disk number in BIOS (Basic Input/Output System) information of a computer and reboots the computer, and thereby the computer reads an OS program from the specified disk. In addition, there has been proposed a virtual computer system in which a virtualization mechanism associates a virtual HBA allocatable to a virtual machine with a WWN (World Wide Name) in advance, and access from the virtual machine to a storage device may be limited based on the WWN.

### Citation List

### Patent Literature

PTL 1: Japanese Patent Laid-Open No. 2007-164305 ([0024], [0025])
PTL 2: Japanese Patent Laid-Open No. 2010-33403

### Summary of Invention

### Technical Problem

A computer is capable of reading and executing a program such as the OS program from a storage device connected via an interface such as an NIC or an HBA. In such a case, it is conceivable that the computer accesses the storage device via the interface by executing an activation code stored in the interface, for example.

However, in a physical machine including a plurality of virtual machines which use the same interface in common, there is a problem in that, when each virtual machine attempts to access a storage device using a code stored in the interface, it is difficult to switch access destination storage devices according to the virtual machine. Accordingly, there arises a risk that, even when a plurality of types of OS programs is stored in a plurality of storage devices in a distributed manner, for example, all the virtual machines may attempt to read the OS programs from the same storage device when there is only a single activation code stored in the interface.

The present invention, made in view of the above problem, is directed to providing an information processing apparatus, a virtual machine management method, and a virtual machine management program which are capable of changing, when activating a program, the storage device from which the program is to be read, according to a virtual machine.

### Solution to Problem

There is provided an information processing apparatus on which a plurality of virtual machines is operable. The information processing apparatus has an interface unit, a storage unit, and a controller. The interface unit is able to access a plurality of storage devices storing programs, and holds a first activation code for reading a program from an access destination storage device, the first activation code including information indicating the access destination storage device among the plurality of storage devices. The storage unit stores a plurality of second activation codes, each including information indicating an access destination storage device among the plurality of storage devices, for reading a program from the access destination storage device via the interface unit. The controller selects, when activating a program on one of the plurality of virtual machines, a second activation code according to the virtual machine from the storage unit, and provides the virtual machine with the selected second activation code in place of the first activation code.

In addition, there is provided a virtual machine management method executed by an information processing apparatus on which a plurality of virtual machines is operable and which is able to access a plurality of storage devices storing programs. In the virtual machine management method, start of activation of a program on one of the plurality of virtual machines is detected. From a storage unit storing a plurality of first activation codes, each including information indicating an access destination storage device among the plurality of storage devices, for reading a program from the access destination storage device via an interface unit included in the information processing apparatus, a first activation code is selected according to the virtual machine which detected the start of activation of the program. The selected first activation code is provided to the virtual machine, in place of a second activation code held by the interface unit and including information indicating an access destination storage device among the plurality of storage devices for reading a program from the access destination storage device.

In addition, there is provided a virtual machine management program executed on a computer on which a plurality of virtual machines is operable and which is able to access a plurality of storage devices storing programs.

### Advantageous Effects of Invention

It is possible to switch, when activating a program, the storage device from which the program is to be read, according to the virtual machine.

The above-mentioned and other objects, characteristics and advantages of the present invention will be apparent by the following description in association with the accompanying drawings illustrating preferred embodiments of the invention.

### Brief Description of Drawings

[FIG. 1] FIG. 1 illustrates an information processing apparatus of a first embodiment.
[FIG. 2] FIG. 2 illustrates an information processing system of a second embodiment.
[FIG. 3] FIG. 3 illustrates an exemplary hardware of a server device of the second embodiment.
[FIG. 4] FIG. 4 illustrates an exemplary hardware of a Fibre Channel switching device of the second embodiment.
[FIG. 5] FIG. 5 is a block diagram illustrating an exemplary arrangement of virtual machines.
[FIG. 6] FIG. 6 is a block diagram illustrating an exemplary allocation of the hardware of the second embodiment.
[FIG. 7] FIG. 7 is a block diagram illustrating functions of the server device of the second embodiment.
[FIG. 8] FIG. 8 illustrates an exemplary data structure of an activation code.
[FIG. 9] FIG. 9 illustrates an exemplary data structure of an activation management table of the second embodiment.
[FIG. 10] FIG. 10 is a flowchart illustrating an overall procedure of the second embodiment.
[FIG. 11] FIG. 11 is a flowchart illustrating a Virtual Function allocation procedure of the second embodiment.
[FIG. 12] FIG. 12 is a sequence chart illustrating the Virtual Function allocation procedure of the second embodiment.
[FIG. 13] FIG. 13 is a flowchart illustrating a Virtual Function deallocation procedure of the second embodiment.
[FIG. 14] FIG. 14 is a sequence chart illustrating the Virtual Function deallocation procedure of the second embodiment.
[FIG. 15] FIG. 15 is a flowchart illustrating a virtual machine activation procedure of the second embodiment.
[FIG. 16] FIG. 16 is a sequence chart illustrating the virtual machine activation procedure of the second embodiment.
[FIG. 17] FIG. 17 is a block diagram illustrating functions of a server device of a third embodiment.
[FIG. 18] FIG. 18 illustrates an exemplary data structure of an activation management table of the third embodiment.
[FIG. 19] FIG. 19 is a flowchart illustrating a Virtual Function allocation procedure of the third embodiment.
[FIG. 20] FIG. 20 is a sequence chart illustrating a Virtual Function allocation procedure of the third embodiment.
[FIG. 21] FIG. 21 is a sequence chart illustrating a virtual machine activation procedure of the third embodiment.
[FIG. 22] FIG. 22 is a block diagram illustrating functions of a Fibre Channel switching device of a fourth embodiment.
[FIG. 23] FIG. 23 is a sequence chart illustrating a Virtual Function allocation procedure of the fourth embodiment.
[FIG. 24] FIG. 24 is a sequence chart illustrating a virtual machine activation procedure of the fourth embodiment.
[FIG. 25] FIG. 25 is a block diagram illustrating functions of a server device of a fifth embodiment.
[FIG. 26] FIG. 26 illustrates an exemplary data structure of an activation management table of the fifth embodiment.
[FIG. 27] FIG. 27 is a flowchart illustrating a Virtual Function allocation procedure of the fifth embodiment.
[FIG. 28] FIG. 28 is a sequence chart illustrating the Virtual Function allocation procedure of the fifth embodiment.
[FIG. 29] FIG. 29 is a sequence chart illustrating a virtual machine activation procedure of the fifth embodiment.

### Description of Embodiments

In the following, embodiments will be described, referring to the drawings.

### [First Embodiment]

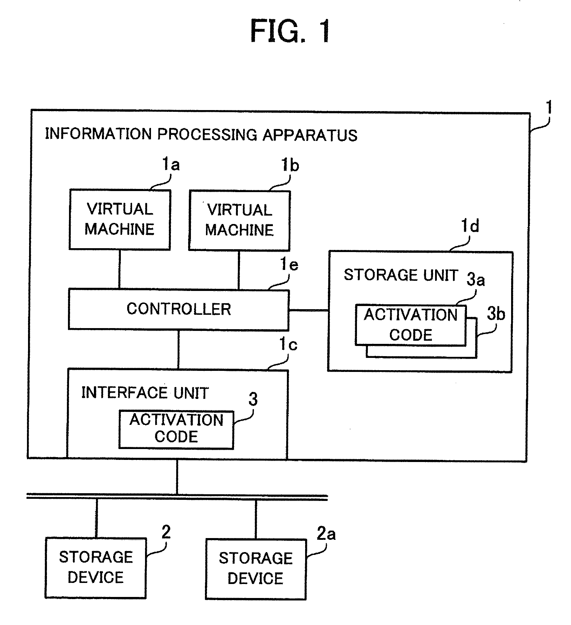

FIG. 1 illustrates an information processing apparatus of a first embodiment. An information processing apparatus 1 allows a plurality of virtual machines including virtual machines 1a and 1b to operate thereon. In addition, the information processing apparatus 1 is able to access storage devices 2 and 2a. The storage devices 2 and 2a are nonvolatile storage devices, for example, and store programs such as the OS program to be executed on the virtual machines 1a and 1b. The storage device 2 and the storage device 2a may store different programs. The information processing apparatus 1 has an interface unit 1c, a storage unit 1d, and a controller 1e.

The interface unit 1c is able to access the storage devices 2 and 2a. The interface unit 1c may be implemented as an adapter such as an NIC or an HBA. The interface unit 1c and the storage devices 2 and 2a may be directly connected by a cable, or connected via a relay device such as a switch. The interface unit 1c holds an activation code 3 (first activation code). The activation code 3 may be stored in a nonvolatile storage device (e.g., ROM (Read Only Memory)) included in the interface unit 1c.

Here, the activation code 3 is a code for accessing one of the storage devices via the interface unit 1c and reading a program from the storage device. The activation code 3 may be one referred to as a boot code. The activation code 3 includes information indicating an access destination storage device among the storage devices 2 and 2a which are accessible from the interface unit 1c. For example, the activation code 3 includes information indicating the storage device 2 as the access destination.

The storage unit 1d stores activation codes 3a and 3b (second activation codes). For example, the storage unit 1d may be implemented as an NVRAM (Non Volatile RAM), a RAM, or an HDD (Hard Disk Drive). The activation codes 3a and 3b are codes for accessing, similarly to the activation code 3, one of the storage devices via the interface unit 1c and reading a program from the storage device. The activation codes 3a and 3b each include information indicating an access destination storage device among the storage devices 2 and 2a which are accessible from the interface unit 1c. For example, the activation code 3a includes information indicating the storage device 2, and the activation code 3b includes information indicating the storage device 2a.

Here, the activation codes 3a and 3b may be generated based on the activation code 3 held by the interface unit 1c, and stored in the storage unit 1d. For example, the activation codes 3a and 3b may be generated by copying the activation code 3 and rewriting the information of the access destination storage device included in the copied activation code. In addition, the storage unit 1d may have at least one activation code associated with each virtual machine. For example, the virtual machine 1a is associated with the activation code 3a, and the virtual machine 1b is associated with the activation code 3b. The storage unit 1d may store management information indicating the relation of the virtual machines 1a and 1b with the activation codes 3a and 3b. However, the management information may be stored in other devices capable of communicating with the information processing apparatus 1.

When activating a program (e.g., the OS program) on one of the virtual machines 1a and 1b, the controller 1e selects the activation code according to the virtual machine from the storage unit 1d. The selected activation code is then provided to the virtual machine, in place of the activation code 3 held by the interface unit 1c. For example, when activating a program on the virtual machine 1a, the controller 1e reads the activation code 3a from the storage unit 1d and provides it to the virtual machine 1a. In addition, when activating a program on the virtual machine 1b, the controller 1e reads the activation code 3b from the storage unit 1d and provides it to the virtual machine 1b.

The function of the controller 1e may be realized by a module of a program to be executed using the CPU and RAM of the information processing apparatus 1, for example. The module may be implemented as a module in the hypervisor. In addition, upon receiving an acquisition request of the activation code 3 from firmware on the virtual machines 1a and 1b, the controller 1e may provide the virtual machines 1a and 1b with one of the activation codes stored in the storage unit 1d, in place of the activation code 3. The firmware on the virtual machines 1a and 1b accesses one of the storage devices 2 and 2a via the interface unit 1c and obtains a program such as an OS program by executing the activation code provided from the controller 1e, for example.

According to the information processing apparatus 1 of the first embodiment, start of activation of a program on one of the virtual machines 1a and 1b is detected. From the activation codes 3a and 3b stored in the storage unit 1d, an activation code according to the virtual machine is selected. The selected activation code is provided to the virtual machine, in place of the activation code 3 held by the interface unit 1c. The virtual machine reads a program such as the OS program by accessing the storage device indicated by the provided activation code.

In this manner, it is possible to switch the access destination storage device according to the virtual machine, even when the virtual machines 1a and 1b use the interface unit 1c in common. For example, the virtual machine 1a establishes connection to the storage device 2 using the activation code 3a, and reads a program stored in the storage device 2a. In addition, the virtual machine 1b establishes connection to the storage device 2a using the activation code 3b, and reads a program stored in the storage device 2a. As thus described, the virtual machines 1a and 1b may read and execute programs stored in different storage devices. For example, the virtual machines 1a and 1b may read and execute OS programs stored in different storage devices.

### [Second Embodiment]

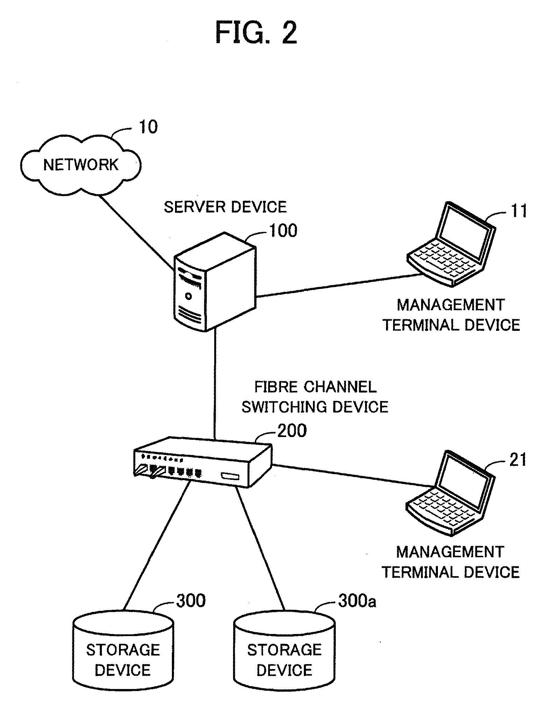

FIG. 2 illustrates an information processing system of a second embodiment. The information processing system includes management terminal devices 11 and 21, a server device 100, an FC (Fibre Channel) switching device 200, and storage devices 300 and 300a. The management terminal device 11 is connected to the server device 100. The management terminal device 21 is connected to the Fibre Channel switching device 200. In addition, the server device 100 is connected to a network 10.

The management terminal devices 11 and 21 are computers operated by the administrator. The management terminal device 11 is provided for the administrator to input instructions to the server device 100. The management terminal device 21 is provided for the administrator to input instructions to the Fibre Channel switching device 200.

The server device 100 is a server computer on which a plurality of virtual machines is operable. The server device 100 manages activation and termination of a plurality of virtual machines. The server device 100 allows, via the network 10, a client device connected to the network 10 to use the function of a virtual machine.

The Fibre Channel switching device 200, including a plurality of Fibre Channel interfaces, is a switcher which relays between respective interfaces. The Fibre Channel switching device 200 relays data communication between the server device 100 and the storage devices 300 and 300a. The Fibre Channel switching device 200 receives instructions from the management terminal device 21 and executes the management function on the Fibre Channel switching device 200.

The storage devices 300 and 300a are storage devices storing programs. Here, the programs stored in the storage devices 300 and 300a are programs for activating the OS (referred to as OS programs in the following). Virtual machines operating on the server device 100 are activated by loading and executing the OS programs stored in the storage devices 300 and 300a. Programs for activating applications other than the OS may also be stored in the storage devices 300 and 300a, and used for activating the applications on the virtual machine.

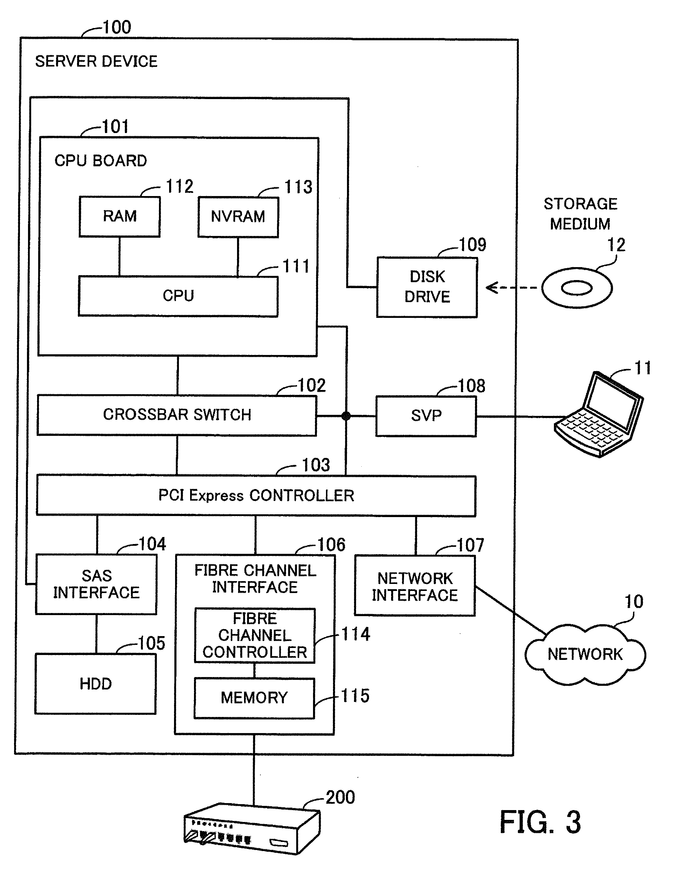

FIG. 3 illustrates an exemplary hardware of the server device of the second embodiment. The server device 100 has a CPU (Central Processing Unit) board 101, a crossbar switch 102, a PCI Express (Peripheral Component Interconnect Express) controller 103, an SAS (Serial Attached SCSI (Small Computer System Interface)) interface 104, an HDD (Hard Disk Drive) 105, a Fibre Channel interface 106, the network interface 107, an SVP (Service Processor) 108, and a disk drive 109.

The CPU board 101 is an information processing unit provided with a CPU and a memory. The CPU board 101 has a CPU 111, a RAM (Random Access Memory) 112, and an NVRAM 113.

The CPU 111 is an arithmetic unit which executes programs of the hypervisor, the OS program, and application programs to realize a virtual machine and applications on the virtual machine. The CPU board 101 may be provided with a plurality of CPUs.

The RAM 112 is a volatile storage device which temporarily stores at least a part of the programs of the hypervisor, the OS program, and application programs to be executed by the CPU 111. The RAM 112 temporarily stores at least a part of the data to be used for processing by the CPU 111. The CPU board 101 may be provided with a plurality of RAMs.

The NVRAM 113 is a nonvolatile storage device which stores data to be used for processing of the hypervisor. The CPU board 101 may be provided with a plurality of NVRAMs or Flash ROMs.

Furthermore, the server device 100 may be provided with a plurality of CPU boards.

The crossbar switch 102 relays data communication between the CPU board 101 and the PCI Express controller 103.

The PCI Express controller 103 controls data communication between the crossbar switch 102 and each of the SAS interface 104, the Fibre Channel interface 106 and the network interface 107.

The SAS interface 104 is connected to the HDD 105 and the disk drive 109 and controls data input to and output from the HDD 105 and the disk drive 109. The disk drive 109 may perform the input and output control, with the SATA (Serial ATA) protocol being encapsulated.

The HDD 105 is a nonvolatile storage device which stores a program of a hypervisor and data used for processing of the hypervisor. The HDD 105 reads from and writes into a built-in magnetic disk, according to an instruction from the CPU 111. The server device 100 may be provided with a nonvolatile storage device (e.g., an SSD (Solid State Drive)) other than an HDD, and be provided with a plurality of storage devices. In addition, programs of the hypervisor to be executed on the CPU board 101 may be stored in the NVRAM 113.

The Fibre Channel interface 106 is an HBA connected to the switching device 200 to control data communication with the switching device 200. The Fibre Channel interface 106 has a Fibre Channel controller 114 and a memory 115. The Fibre Channel controller 114 is an arithmetic unit which controls the operation of the Fibre Channel interface 106. The memory 115 stores data to be used for processing of the Fibre Channel controller 114. The server device 100 may be provided with a plurality of Fibre Channel controllers.

The network interface 107 is connected to the network 10 and controls data communication with other devices via the network 10.

The SVP 108 is a device for managing the server device 100. The SVP 108 is connected to the CPU board 101, the crossbar switch 102 and the PCI-Express controller 103 of the server device via an I2C or the like. The SVP 108 is connected to the management terminal device 11. The SVP 108 causes the management terminal device 11 to display a GUI (Graphical User Interface) for managing the server device 100. The administrator may operate the GUI using the management terminal device 11 to provide instructions to the server device 100.

The disk drive 109 is a drive device which reads programs and data stored on a storage medium 12. As the storage medium 12, a magnetic disk such as a Flexible Disk (FD) or an HDD, an optical disk such as a CD (Compact Disc) or a DVD (Digital Versatile Disc), or an MO (MagnetoOptical disk), for example, are available. According to an instruction from the CPU 111, for example, the disk drive 109 stores, in the RAM 112 or the HDD 105, programs and data which have been read from the storage medium 12.

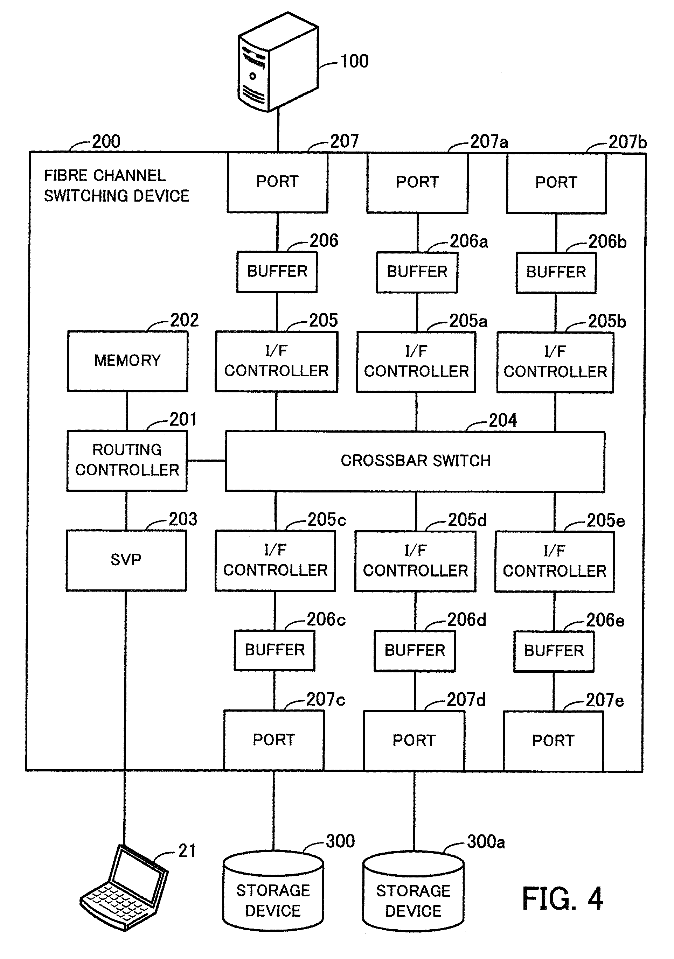

FIG. 4 illustrates an exemplary hardware of the Fibre Channel switching device of the second embodiment. The Fibre Channel switching device 200 has a routing controller 201, a memory 202, an SVP 203, a crossbar switch 204, 1/F (InterFace) controllers 205, 205a, 205b, 205c, 205d and 205e, buffers 206, 206a, 206b, 206c, 206d and 206e, and ports 207, 207a, 207b, 207c, 207d and 207e.

Although descriptions are provided below with regard to the InterFace controller 205, the buffer 206, and the port 207, the same goes for the interface controllers 205a, 205b, 205c, 205d and 205e, the buffers 206a, 206b, 206c, 206d and 206e, and the ports 207a, 207b, 207c, 207d and 207e.

The routing controller 201 controls data communication between a plurality of SANs (Storage Area Network).

The memory 202 stores data to be used for processing of the routing controller 201. For example, the memory 202 stores a routing table for connection between the SANs.

The SVP 203 is a device for managing the Fibre Channel switching device 200. The SVP 203 is connected to the management terminal device 21. The SVP 203 causes the management terminal device 21 to display a GUI for managing the Fibre Channel switching device 200. The administrator may operate the GUI using the management terminal device 21 to provide instructions to the Fibre Channel switching device 200.

The crossbar switch 204 relays data communication between devices via respective ports.

The InterFace controller 205 controls data flow between respective ports.

The buffer 206 is a storage area for temporarily storing data in order to control data flow.

The port 207 is an adapter for connection to external devices. The port 207 is connected to the server device 100 via a Fibre Channel cable. The port 207c is connected to the storage device 300 via a Fibre Channel cable. The port 207d is connected to the storage device 300a via a Fibre Channel cable.

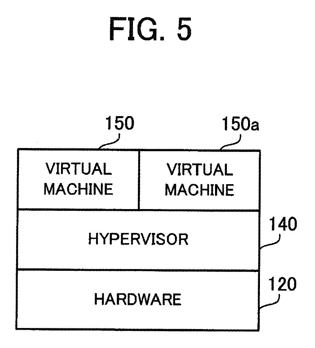

FIG. 5 is a block diagram illustrating an exemplary arrangement of virtual machines. The server device 100 has a hardware 120, a hypervisor 140, and virtual machines 150 and 150a.

The hardware 120 is the physical resource provided in the server device 100. The hardware 120 includes the CPU board 101, the PCI Express controller 103, the SAS interface 104, the HDD 105, the Fibre Channel interface 106, the network interface 107, and the disk drive 109.

The hypervisor 140 realizes a virtual machine. The hypervisor 140 performs allocation of the hardware 120 to each virtual machine, and controls activation and termination of each virtual machine. In addition, the hypervisor 140 mediates access to the hardware 120 of each virtual machine so that each virtual machine may use the hardware 120 in common. Furthermore, the hypervisor 140 monitors the usage status of the hardware 120 allocated to each virtual machine.

The virtual machines 150 and 150a are virtual machines realized on the server device 100 by the hypervisor 140. The virtual machines 150 and 150a execute independent OSs, respectively. The virtual machines 150 and 150a are capable of obtaining the OS programs from the storage devices 300 and 300a at the time of activation. Specifically, the virtual machines 150 and 150a establish connection to the storage devices 300 and 300a using an activation code provided from the hypervisor 140. The virtual machines 150 and 150a then load the OS programs from predetermined storage areas of the storage devices 300 and 300a.

The OSs executed on the virtual machines 150 and 150a may be identical to or different from each other. When they are the same OS, setting at the time of activation may be different.

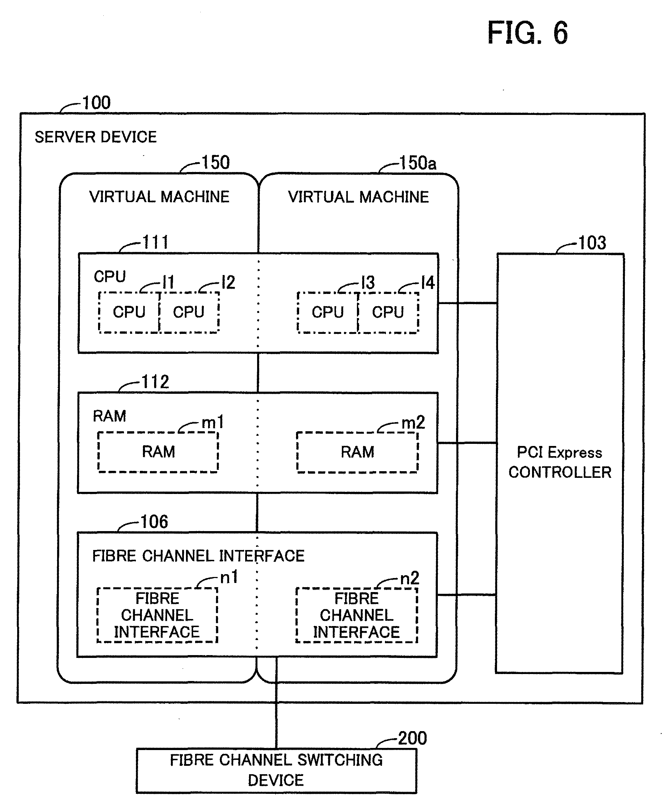

FIG. 6 is a block diagram illustrating an exemplary allocation of the hardware of the second embodiment. The virtual machines 150 and 150a are realized by resources obtained by logically dividing the hardware 120 on the server device 100. FIG. 6 illustrates the CPU 111, the RAM 112, and the Fibre Channel interface 106 as main components included in the hardware 120.

The CPU 111 is time-shared by CPU resources 11, 12, 13 and 14. For example, the CPU resources 11 and 12 are allocated to the virtual machine 150, and the CPU resources 13 and 14 are allocated to the virtual machine 150a. The CPU may be time-shared in terms of instructions, processes, or operational circuits.

The RAM 112 is area-divided into RAM resources m1 and m2. For example, the RAM resource m1 is allocated to the virtual machine 150, and the RAM resource m2 is allocated to the virtual machine 150a.

The Fibre Channel interface 106 is divided into Fibre Channel interface resources n1 and n2. For example, the Fibre Channel interface resources n1 and n2 include resources obtained by time-sharing the Fibre Channel controller 114. In addition, for example, the Fibre Channel interface resources n1 and n2 include resources obtained by area-dividing the memory 115 reserved for the buffer. For example, the Fibre Channel interface resource n1 is allocated to the virtual machine 150, and the Fibre Channel interface resource n2 is allocated to the virtual machine 150a. Assuming that the Fibre Channel interface 106 is the physical HBA, the Fibre Channel interface resources n1 and n2 are the virtual HBAs realized on the physical HBA.

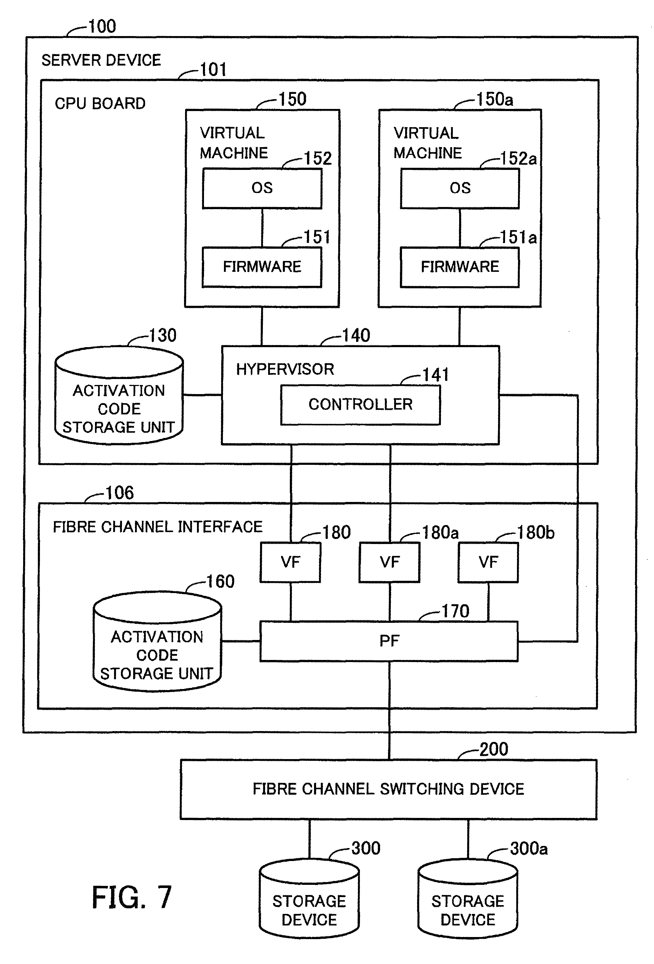

FIG. 7 is a block diagram illustrating the functions of the server device of the second embodiment. The server device 100 has activation code storage units 130 and 160, the hypervisor 140, the virtual machines 150 and 150a, a Physical Function (PF) 170, and Virtual Functions (VF) 180, 180a and 180b. The functions of the activation code storage unit 130, the hypervisor 140, and the virtual machines 150 and 150a are realized on the server device 100 by the CPU 111 executing a predetermined program. In addition, the activation code storage unit 160, the Physical Function 170, and the Virtual Functions 180, 180a and 180b are realized on the server device 100 by the Fibre Channel controller 114 executing a predetermined program. However, all or a part of the functions of these units may be implemented by a dedicated hardware.

The activation code storage unit 130 stores a plurality of activation codes and an activation management table. The activation codes are data describing processes and setting contents for the virtual machines 150 and 150a to establish connection to the storage devices 300 and 300a, and obtain the OS programs from the storage devices 300 and 300a. The activation management table is data defining the connection of the virtual machines 150 and 150a to the storage devices 300 and 300a, and the correspondence relation of the activation codes.

The hypervisor 140 has a controller 141. The controller 141 obtains an activation code from the Fibre Channel interface 106, copies it for each of the virtual machines 150 and 150a, and stores it in the activation code storage unit 130. The hypervisor 140 edits the activation code for each of the virtual machines 150 and 150a. The contents of editing are instructed from the management terminal device 11, for example. When activating the virtual machines 150 and 150a, the controller 141 selects an activation code according to the virtual machines 150 and 150a from the activation code storage unit 130, and provides the selected activation code to the virtual machines 150 and 150a. In this occasion, the controller 141 selects the activation code according to the virtual machines 150 and 150a referring to the activation management table stored in the activation code storage unit 130.

The virtual machine 150 has a firmware 151 and an OS 152. The firmware 151 is software for loading a program of the OS 152 on the virtual machine 150 and activating the OS 152.

The OS 152 is a basic program which operates on the virtual machine 150. The virtual machine 150a has a firmware 151a and an OS 152a. The firmware 151a corresponds to the firmware 151. The OS 152a corresponds to the OS 152.

The activation code storage unit 160 stores an activation code. The activation code to be stored in the activation code storage unit 160 is preliminarily set by the administrator, for example. The activation code is the default activation code as the model of the activation code to be stored in the activation code storage unit 130.

The Physical Function 170 is a data communication control module. The Physical Function 170 realizes the Virtual Functions 180, 180a and 180b on the Fibre Channel interface 106. In addition, the Physical Function 170 outputs the activation code stored in the activation code storage unit 160 to the hypervisor 140 in response to a request from the hypervisor 140. The Physical Function 170 is an exemplary access unit.

The Virtual Functions 180, 180a and 180b are data communication control modules generated by the Physical Function 170. The Virtual Functions 180, 180a and 180b function as virtual adapters to the virtual machines 150 and 150a. The virtual machines 150 and 150a share a single Physical Function 170 by accessing the Virtual Functions 180, 180a and 180b, allowing data communication with external storage devices 300 and 300a.

The number of Virtual Functions to be executed by the Fibre Channel interface 106 may be determined according to the operation. Although FIG. 7 illustrates a case of executing three functions, any number other than three is allowed.

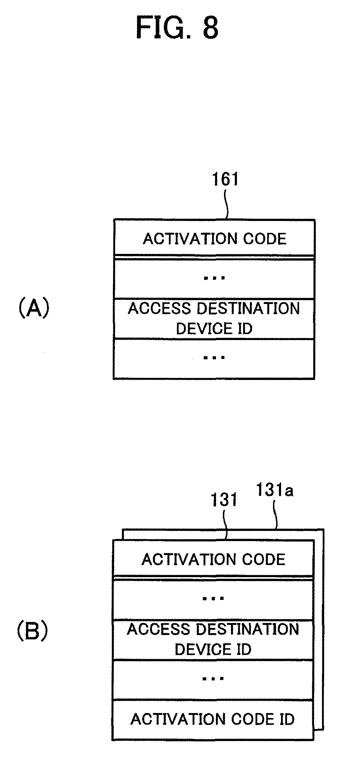

FIG. 8 illustrates an exemplary data structure of an activation code. FIG. 8(A) illustrates an activation code 161 stored in the activation code storage unit 160. FIG. 8(B) illustrates activation codes 131 and 131a stored in the activation code storage unit 130.

The activation code 161 includes setting of an access destination device ID (IDentifier). An access destination device ID has set therein information for identifying a connection destination storage device. The identification information is, for example, a WWN corresponding to the connection destination storage device. For example, the WWN of the Fibre Channel interface provided in the storage device 300 is set by default.

The activation codes 131 and 131a include settings of the access destination device ID and the activation code ID. The access destination device ID corresponds to the access destination device ID to be set in the activation code 161.

The activation codes 131 and 131a may have set therein different access destination device IDs from each other. For example, the access destination device ID of the activation code 131 has set therein the WWN of the Fibre Channel interface provided in the storage device 300. In addition, the access destination device ID of the activation code 131a has set therein the WWN of the Fibre Channel interface provided in the storage device 300a.

In addition, the activation code ID is identification information for uniquely identifying the activation codes 131 and 131a. For example, the activation code 131 has an activation code ID "0" set therein. In addition, the activation code 131a has an activation code ID "1" set therein.

The values of the access destination device ID and the activation code ID of the activation codes 131 and 131a are set by the controller 141.

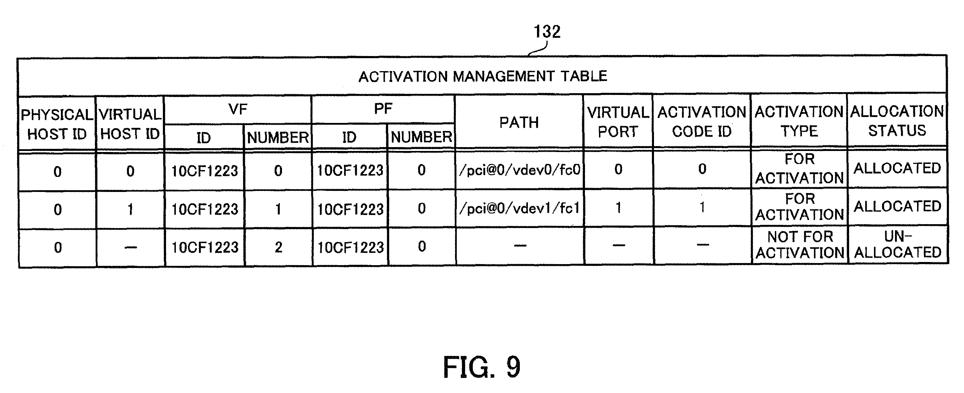

FIG. 9 illustrates an exemplary data structure of an activation management table of the second embodiment. An activation management table 132 is stored in the activation code storage unit 130. The activation management table 132 is updated by the controller 141. The activation management table 132 includes columns such as physical host ID, virtual host ID, Virtual Function, Physical Function, path, virtual port, activation code ID, activation type and allocation status. Information of the columns arranged in the lateral direction are associated with each other, indicating allocation of a Virtual Function and an activation code to a virtual machine.

The physical host ID column has set therein identification information of a CPU board. The virtual host ID column has set therein identification information of a virtual machine. The Virtual Function column has set therein identification information of a Virtual Function. The identification information of a Virtual Function includes a pair of an ID of a device of the Fibre Channel interface 106 which causes the Virtual Function to operate, and a number for identifying individual Virtual Functions on a Physical Function. The Physical Function column has set therein identification information of a Physical Function. The identification information of a Physical Function includes a pair of an ID of a device of the Fibre Channel interface 106 which causes the Physical Function to operate, and a number for identifying individual Physical Functions. The path column has set therein device path information for the firmware to identify a Physical Function and a Virtual Function in association with each other. The virtual port column has set therein identification information of a virtual port available on the Fibre Channel interface 106. As information of a virtual port, for example, NPIV (N Port ID Virtualization) may be used. The activation code ID column has set therein an activation code ID. The activation type column has set therein information indicating whether or not to be used for activation of an OS on a virtual machine (when simply referred to as "for activation" in the following, it is meant to be used for activating an OS on a virtual machine). The column indicating the allocation status has set therein information indicating whether or not the Virtual Function has been allocated to one of the virtual machines.

For example, the activation management table 132 has set therein information with the physical host ID being "0", the virtual host ID being "0", the Virtual Function having an ID "10CF1223" and a number "0", the Physical Function having an ID "10CF1223" and a number "0", the path being "/pci@0/vdev0/fc0", the virtual port being "0", the activation code ID being "0", the activation type being "for activation", and the allocation status being "allocated".

The foregoing indicates the correspondence relation among the virtual machine 150, the Virtual Function 180, and the virtual port on the Physical Function 170. In other words, it is indicated that the Virtual Function 180 (ID-number pair being "10CF1223-0") is associated with the virtual machine 150 (virtual host ID being "0") realized on the CPU board 101 (physical host ID being "0"). In addition, it is indicated that the device path information for performing input to and output from the Virtual Function 180 is "/pci@0/vdev0/fc0". Furthermore, it is indicated that a virtual port "0" of the Physical Function 170 (ID-number pair being "10CF1223-0") is associated with the Virtual Function 180. In addition, it is indicated that the Virtual Function 180 has been specified for activation of an OS on a virtual machine and has been allocated to the virtual machine 150.

In addition, for example, the activation management table 132 has set therein information with the physical host ID being "0", the virtual host ID being "1", the Virtual Function having an ID "10CF1223" and a number "1", the Physical Function having an ID "10CF1223" and a number "0", the path being "/pci@0/vdev1/fc1", the virtual port being "1", the activation code ID being "1", the activation type being "for activation", and the allocation status being "allocated".

The foregoing indicates correspondence relation among the virtual machine 150a, the Virtual Function 180a and the virtual port on the Physical Function 170. In other words, it is indicated that the Virtual Function 180a (ID-number pair "10CF1223-1") is associated with the virtual machine 150a (virtual host ID being "1") realized on the CPU board 101 (physical host ID being "0"). In addition, it is indicated that the device path information for performing input to and output from the Virtual Function 180a is "/pci@0/vdev1/fc1". Furthermore, it is indicated that the virtual port "1" of the Physical Function 170 is associated with the Virtual Function 180a. In addition, the Virtual Function 180a has been specified for activation of an OS on a virtual machine and has been allocated to the virtual machine 150a.

In addition, for example, the activation management table 132 has set therein information with the physical host ID being "0", the virtual host ID being "-" (hyphen), the Virtual Function having an ID "10CF1223" and a number "2", the Physical Function having an ID "10CF1223" and a number "0", the path being "-" (hyphen), the virtual port being "-" (hyphen), the activation code ID being "-" (hyphen), the activation type being "not for activation", and the allocation status being "unallocated".

The foregoing indicates the information of the Virtual Function 180b. Specifically, it is indicated that the Physical Function 170 (ID-number pair being "10CF1223-0") is associated with the Virtual Function 180b (ID-number pair "10CF1223-2"). In addition, since there is no setting ("-") for the virtual host ID, the path, the virtual port and the activation code ID, and the allocation status is "unallocated", it is indicated that the Virtual Function 180b has not been allocated yet to any of the virtual machines.

Since the setting of the activation type column has not been established as to whether the Virtual Function 180b is to be used for activation of an OS on a virtual machine, or to be used for activating any of the applications, "not for activation" is set as the default setting.

For example, it is also possible to allocate, to one of the virtual machines 150 and 150a, the unallocated Virtual Function 180b for activating a predetermined application. In such a case, setting of the activation type column becomes "not for activation". As thus described, it is also possible to allow coexistence of Virtual Functions used for activation and Virtual Functions used for other purposes, and use the Virtual Functions in a distinguished manner.

In addition, for example, it is also possible to further allocate, to one of the virtual machines 150 and 150a, the unallocated Virtual Function 180b for activation of an OS on a virtual machine. It is useful, for example, when attempting to perform activation by specifying different activation codes. Specifically, it is conceivable to newly associate, with the virtual machine 150, the virtual port "2" and the activation code 131a of the unallocated Virtual Function 180b and the Physical Function 170.

Next, a processing procedure of the server device 100 having the aforementioned configuration will be described.

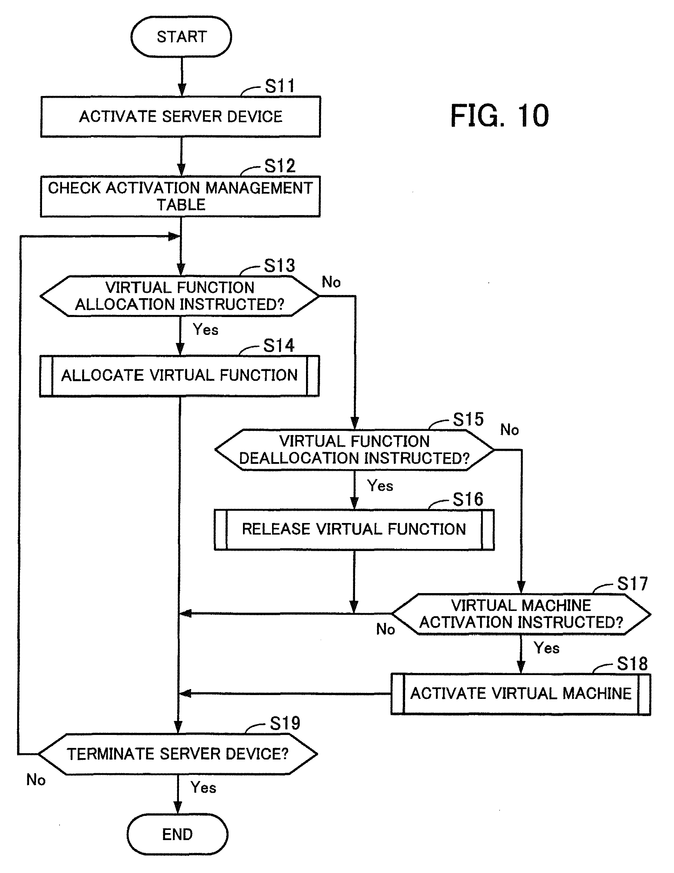

FIG. 10 is a flowchart illustrating the overall procedure of the second embodiment. In the following, the procedure illustrated in FIG. 10 will be described in the order of step numbers.

(Step S11) The server device 100 is activated. The hypervisor 140 is then executed by the CPU board 101.

(Step S12) The controller 141 checks the correspondence relation among virtual machines, Virtual Functions, and virtual ports of Physical Functions, referring to the activation management table 132 stored in the activation code storage unit 130. When, for example, confirmation of existence of an allocated Virtual Function and a Physical Function fails, it is conceivable to notify the management terminal device 11 of the fact.

(Step S13) The controller 141 determines whether or not a Virtual Function allocation instruction is received. A Virtual Function allocation instruction is input to the controller 141 when the administrator performs a predetermined operation on the management GUI using the management terminal device 11, for example. When a Virtual Function allocation instruction is received, the process flow proceeds to step S14. When no virtual function allocation instruction is received, the process flow proceeds to step S15. Here, the Virtual Function allocation instruction includes information indicating a virtual machine desired to be newly allocated with Virtual Functions, and information specifying the Physical Function desired to be allocated and the number of Virtual Functions to be allocated. Specifying a Physical Function also means specifying a set of Virtual Functions realized on the Physical Function.

(Step S14) The controller 141 performs a Virtual Function allocation procedure based on the Virtual Function allocation instruction. The process flow then proceeds to step S19.

(Step S15) The controller 141 determines whether or not a Virtual Function deallocation instruction is received. A Virtual Function deallocation instruction is input to the controller 141 when the administrator performs a predetermined operation on the management GUI using the management terminal device 11, for example. When a Virtual Function deallocation instruction is received, the process flow proceeds to step S16. When no Virtual Function deallocation instruction is received, the process flow proceeds to step S17. Here, the Virtual Function deallocation instruction includes information indicating a Virtual Function to be released.

(Step S16) The controller 141 performs a Virtual Function deallocation procedure based on a Virtual Function deallocation instruction. The process flow then proceeds to step S19.

(Step S17) The controller 141 determines whether or not a virtual machine activation instruction is received. A virtual machine activation instruction is input to the controller 141 when the administrator performs a predetermined operation on the management GUI using the management terminal device 11, for example. When a virtual machine activation instruction is received, the process flow proceeds to step S18. When no virtual machine activation instruction is received, the process flow proceeds to step S19. Here, the virtual machine activation instruction includes information indicating a virtual machine to be activated.

(Step S18) The controller 141 activates a virtual machine based on a virtual machine activation instruction.

(Step S19) The hypervisor 140 determines whether or not the server device 100 is to be terminated. When the server device 100 is to be terminated, the hypervisor 140 performs a termination procedure in preparation of termination of the server device 100, and terminates the procedure. When the server device 100 is not to be terminated, the process flow proceeds to step S13.

As thus described, the server device 100 performs allocation and releasing of Virtual Functions and activation of OSs on virtual machines according to various instructions. In the following, the procedures will be described individually.

First, the Virtual Function allocation procedure of step S14 will be described.

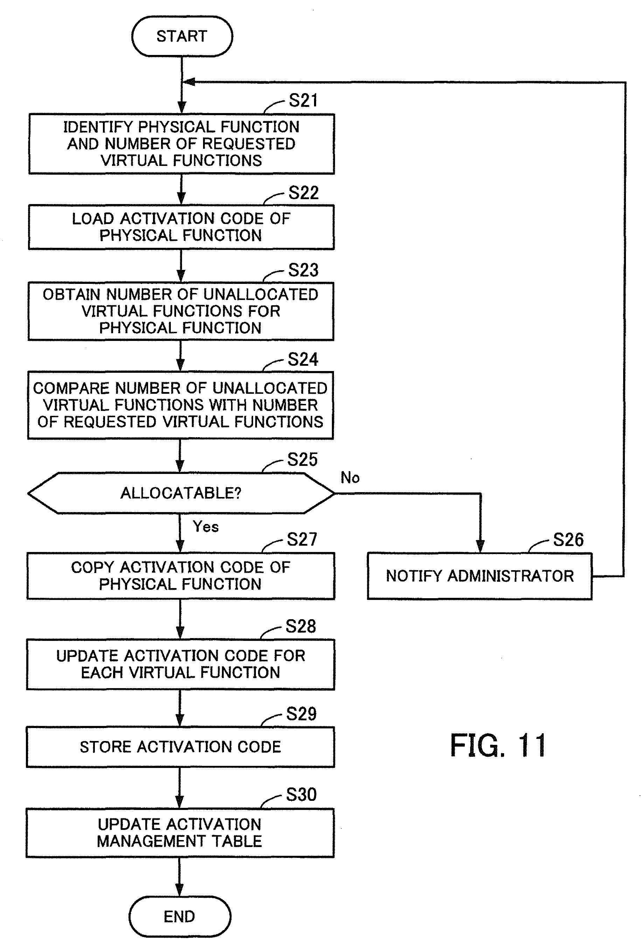

FIG. 11 is a flowchart illustrating the Virtual Function allocation procedure of the second embodiment. In the following, the procedure illustrated in FIG. 11 will be described in the order of step numbers.

(Step S21) The controller 141 obtains a Virtual Function allocation instruction. The Virtual Function allocation instruction includes, for example, an instruction to allocate, to the virtual machines 150 and 150a, two Virtual Functions for activation from the Physical Function 170. The controller 141 identifies the Physical Function and the number of requested Virtual Functions (two, in this case) included in the Virtual Function allocation instruction.

(Step S22) The controller 141 checks, from the identified Physical Function, the number of Virtual Functions arranged on the Physical Function, and loads the activation code. For example, the controller 141 loads the activation code 161 from the Physical Function 170. In this occasion, the activation code 161 stored in the activation code storage unit 160 is read and output to the controller 141 by the Physical Function 170.

(Step S23) The controller 141 obtains the number of unallocated Virtual Functions for the Physical Function, referring to the activation management table 132. For example, three is obtained as the number of allocated Virtual Functions for the Physical Function 170 (for example, the allocation statuses of the Virtual Functions 180, 180a and 180b are all "unallocated").

(Step S24) The controller 141 compares the number of unallocated Virtual Functions with the number of requested Virtual Functions.

(Step S25) The controller 141 determines whether or not the requested Virtual Function is allocatable. The case of being "allocatable" refers to a case where the number of unallocated Virtual Functions is equal to or larger than the number of requested Virtual Functions. On the other hand, the case of being "unallocatable" refers to a case where the number of unallocated Virtual Functions is smaller than the number of requested Virtual Functions. When the requested Virtual Function is allocatable, the process flow proceeds to step S27. When the requested Virtual Function is unallocatable, the process flow proceeds to step S26. The controller 141 selects a Virtual Function to be allocated when it is allocatable. For example, the controller 141 selects a Virtual Function to be allocated in the ascending order of the identification information of Virtual Functions. For example, the Virtual Functions 180 and 180a, among the Virtual Functions 180, 180a and 180b, are selected for allocation.

(Step S26) The controller 141 notifies the management terminal device 11 that no Virtual Function is allocatable from the requested Physical Function. The administrator may check the notification and issue a Virtual Function allocation request again, specifying another Physical Function.

(Step S27) The controller 141 copies the activation code loaded from the Physical Function at step S22 as many as the number of requested Virtual Functions. In this occasion, the controller 141 provides the copied activation code with an activation code ID. For example, the controller 141 copies the activation code 161 loaded from the Physical Function 170 as many as the number of requested Virtual Functions "2", and generates the activation codes 131 and 131a. The controller 141 then provides the activation code 131 with an activation code ID "0", for example. The activation code 131a is provided with an activation code ID "1".

(Step S28) The controller 141 updates the activation code for each Virtual Function according to an instruction from the management terminal device 11. Specifically, the controller 141 changes the access destination device IDs of the activation codes 131 and 131a to setting contents specified by the administrator. For example, the access destination device ID of the activation code 131 is changed to the WWN of the storage device 300. In addition, the access destination device ID of the activation code 131a is changed to the WWN of the storage device 300a. It is also conceivable to specify the access destination device based on the topology (connection form) information, as well as on the access destination device ID.

(Step S29) Upon receiving a complete-editing instruction from the management terminal device 11, the controller 141 stores the changed activation code in the activation code storage unit 130. For example, the controller 141 stores the activation codes 131 and 131a in the activation code storage unit 130.

(Step S30) The controller 141 updates the activation management table 132. For example, the controller 141 associates the virtual machine 150 (virtual host ID being "0"), the Virtual Function 180 (ID-number pair being "10CF1223-0"), the virtual port "0" of the Physical Function 170, and the activation code 131 (activation code ID being "0") with each other, and sets a path. In addition, the controller 141 associates the virtual machine 150a (virtual host ID being "1"), the Virtual Function 180a (ID-number pair "10CF1223-1"), the virtual port "1" of the Physical Function 170, and the activation code 131a (activation code ID being "1") with each other, and sets a path. Furthermore, the controller 141 sets, for each of the records, the activation type to "for activation" and the allocation status to "allocated". The controller 141 then notifies the management terminal device 11 of completion of allocation.

As thus described, upon receiving a Virtual Function allocation instruction, the controller 141 edits the activation management table 132 and performs allocation of the Virtual Functions 180 and 180a to the virtual machines 150 and 150a.

The Virtual Function allocation instruction may include an access destination device ID desired to be set to each Virtual Function, or other setting information. In such a case, the controller 141 may set, at step S28, the access destination device ID or the like specified in the Virtual Function allocation instruction, to the activation codes 131 and 131a. Accordingly, the administrator is relieved of the operation at step S28.

Additionally, although step S30 exemplifies a case in which the virtual machine 150 is associated with the Virtual Function 180 and the virtual machine 150a is associated with the Virtual Function 180a (when associating in the ascending order of IDs), the manner of association is not limited thereto. For example, the virtual machine 150 may be associated with the Virtual Function 180a, and the virtual machine 150a may be associated with the Virtual Function 180. Furthermore, allocation of virtual ports of the Physical Function 170 may be performed by selecting, for example, an unallocated virtual port among those sorted in the ascending order of IDs.

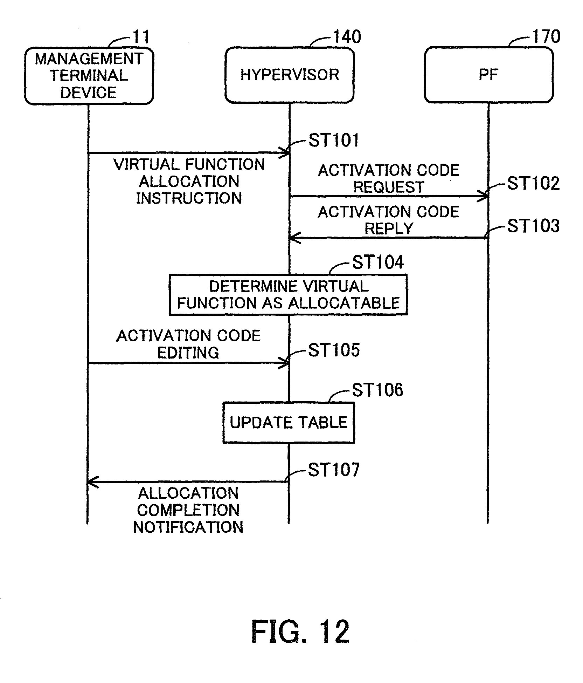

FIG. 12 is a sequence chart illustrating the Virtual Function allocation procedure of the second embodiment. In the following, the procedure illustrated in FIG. 12 will be described in the order of step numbers. It is assumed that, immediately before step ST101 described below, the allocation status of the Virtual Functions 180, 180a and 180b is "unallocated" in the activation management table 132 stored in the activation code storage unit 130.

(Step ST101) The management terminal device 11 transmits a Virtual Function allocation instruction to the hypervisor 140. It is assumed that the Virtual Function allocation instruction includes an instruction to allocate, to the virtual machines 150 and 150a, two Virtual Functions from the Physical Function 170.

(Step ST102) Upon receiving the Virtual Function allocation instruction, the hypervisor 140 makes a request to the specified Physical Function 170 for the activation code 161.

(Step ST103) The Physical Function 170 obtains the activation code 161 from the activation code storage unit 160, according to the request from the hypervisor 140, and outputs the activation code 161 to the hypervisor 140.

(Step ST104) The hypervisor 140 checks the number of Virtual Functions arranged on the Physical Function, based on the activation code 161. The hypervisor 140 determines that the virtual machines 150 and 150a are allocatable to the unallocated Virtual Functions 180, 180a and 180b on the Physical Function 170, referring to the activation management table 132 stored in the activation code storage unit 130.

(Step ST105) The hypervisor 140 copies the activation code 161 and generates the activation codes 131 and 131a. The hypervisor 140 provides the activation codes 131 and 131a with activation code IDs. The hypervisor 140 causes the management terminal device 11 to display the contents of the activation codes 131 and 131a, allowing editing thereof from a GUI on the management terminal device 11. The administrator inputs, from the GUI, the contents of editing respective activation codes. The management terminal device 11 transmits, to the hypervisor 140, the contents of editing the activation codes 131 and 131a. Upon receiving an input indicating completion of editing, the management terminal device 11 notifies the hypervisor 140 of the fact.

(Step ST106) The hypervisor 140 reflects the contents of editing to the activation codes 131 and 131a, and stores the contents in the activation code storage unit 130. The hypervisor 140 then updates the activation management table 132.

(Step ST107) The hypervisor 140 notifies the management terminal device 11 of completion of allocation.

As thus described, the hypervisor 140 obtains the activation code 161 from the Physical Function 170, and generates the activation codes 131 and 131a using the activation code 161 as a model. The hypervisor 140 associates the virtual machines 150 and 150a, the Virtual Functions 180, 180a, the virtual port of the Physical Function 170, and the activation codes 131 and 131a with each other. The hypervisor 140 manages the correspondence relation using the activation management table 132.

Next, the Virtual Function deallocation procedure at step S16 of FIG. 10 will be described.

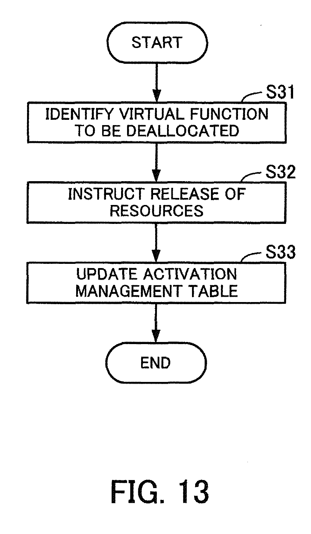

FIG. 13 is a flowchart illustrating the Virtual Function deallocation procedure of the second embodiment. In the following, the procedure illustrated in FIG. 13 will be described in the order of step numbers.

(Step S31) The controller 141 identifies, from the contents of the allocation release instruction, a Virtual Function to be deallocated. For example, the controller 141 identifies the Virtual Function 180 to be deallocated.

(Step S32) The controller 141 instructs the Virtual Function to be deallocated and the Physical Function to which the Virtual Function belongs to release the resources reserved for communication. For example, the controller 141 instructs the Physical Function 170 and Virtual Function 180 to release resources.

(Step S33) The controller 141 updates the activation management table 132. Specifically, the controller 141 clears the setting values of respective columns of the virtual host ID, the path, the virtual port, and the activation code ID which are set in the record of the Virtual Function 180. In addition, the controller 141 sets "not for activation" in the activation type column. Furthermore, the controller 141 sets "unallocated" to the allocation status column.

As thus described, upon receiving a Virtual Function deallocation instruction, the controller 141 edits the activation management table 132, and releases allocation of the Virtual Function 180 to the virtual machine 150.

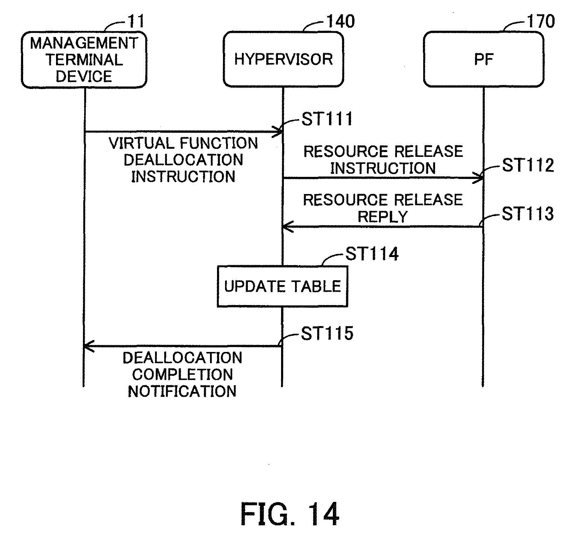

FIG. 14 is a sequence chart illustrating the Virtual Function deallocation procedure of the second embodiment. In the following, the procedure illustrated in FIG. 14 will be described in the order of step numbers. It is assumed that, immediately before step ST111 described below, the virtual machine 150 (virtual host ID being "0"), the Virtual Function 180 (Virtual Function ID-number pair being "10CF1223-0"), and the activation code 131 (activation code ID being "0") are associated with each other in the activation management table 132 stored in the activation code storage unit 130.

(Step ST111) The management terminal device 11 transmits a Virtual Function deallocation instruction to the hypervisor 140. It is assumed that the Virtual Function deallocation instruction includes an instruction to deallocate the Virtual Function 180.

(Step ST112) Upon receiving the Virtual Function deallocation instruction, the hypervisor 140 transmits, to the Virtual Function 180 which has received the deallocation instruction and the Physical Function 170 to which the Virtual Function 180 belongs, an instruction to release the reserved resources.

(Step ST113) The Physical Function 170, according to the resource release instruction, releases the storage area or the like which has been reserved in the memory 115 for communication using the Virtual Function 180. The Virtual Function 180 similarly releases the storage area or the like which has been reserved in the memory 115 for communication. The Physical Function 170 then replies to the hypervisor 140 with a notification of completion of releasing the resources.

(Step ST114) The hypervisor 140 updates the activation management table 132 stored in the activation code storage unit 130. Specifically, the hypervisor 140 deletes, from the activation management table 132, information of the virtual machine 150, the path, the virtual port of the Physical Function 170, and the activation code 131 which have been associated with the Virtual Function 180.

(Step ST115) The hypervisor 140 notifies the management terminal device 11 of completion of deallocating the Virtual Function according to the Virtual Function deallocation instruction.

As thus described, the hypervisor 140 deallocates the Virtual Function 180. The hypervisor 140 updates the setting contents of the activation management table 132, and the Virtual Function 180 is managed as being in an unallocated state. Accordingly, the Virtual Function 180 becomes allocatable to other virtual machines, and thus the state of the Virtual Function 180 is appropriately managed.

It has been assumed at step ST114 described above to leave the activation code 131 without deleting it from the activation code storage unit 130. However, the activation code 131 may be deleted from the activation code storage unit 130.

Next, the virtual machine activation procedure at step S18 of FIG. 10 will be described.

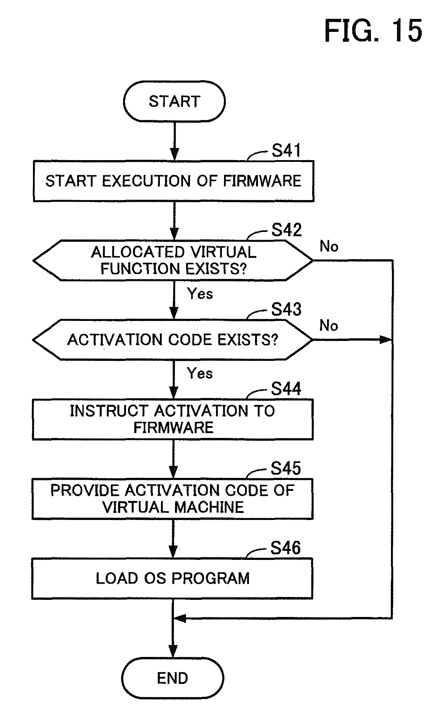

FIG. 15 is a flowchart illustrating the virtual machine activation procedure of the second embodiment. In the following, the procedure illustrated in FIG. 15 will be described in the order of step numbers.

(Step S41) Upon receiving a virtual machine activation instruction, the controller 141 causes the CPU 111 to execute the firmware of the specified virtual machine. For example, the controller 141 receives an activation instruction from the virtual machines 150 and 150a. The controller 141 then causes the CPU 111 to execute firmware 151 and 151a. Accordingly, the functions of the firmwares 151 and 151a are realized on the server device 100, and activation of the virtual machines 150 and 150a is started.

(Step S42) The controller 141 determines whether or not there exists a Virtual Function allocated to the virtual machine to be activated, referring to the activation management table 132 stored in the activation code storage unit 130. When the Virtual Function exists, the process flow proceeds to step S43. When it does not exist, the procedure is terminated. For example, the controller 141 checks that the Virtual Functions 180 and 180a have been allocated to the virtual machines 150 and 150a to be activated.

(Step S43) The controller 141 determines whether or not there exists an activation code allocated to the virtual machine to be activated, referring to the activation management table 132. When the activation code exists, the process flow proceeds to step S44. When it does not exist, the procedure is terminated. For example, the controller 141 checks that the activation codes 131 and 131a have been allocated to the virtual machines 150 and 150a to be activated.

(Step S44) The controller 141 instructs the firmware realized on the server device 100 at step S41 to activate the virtual machine. The firmware then makes a request to the controller 141 for an activation code for loading an OS program. For example, the firmwares 151 and 151a which have received the activation instruction request an activation code to the controller 141.

(Step S45) Upon receiving the request, the controller 141 identifies the activation code associated with each virtual machine, referring to the activation management table 132 stored in the activation code storage unit 130. For example, the controller 141 identifies the activation code 131 for the virtual machine 150, and identifies the activation code 131a for the virtual machine 150a. The controller 141 provides the activation code 131 to the firmware 151. The controller 141 provides the activation code 131a to the firmware 151a.

(Step S46) The firmwares 151 and 151a establish connection to the storage devices 300 and 300a based on the activation codes and the virtual ports obtained from the controller 141, and load OS programs from respective devices. For example, the firmware 151 establishes connection to the storage device 300 corresponding to a WWN specified by the access destination device ID of the activation code 131, and loads an OS program from the storage device 300. In addition, the firmware 151a establishes connection to the storage device 300a corresponding to a WWN specified by the access destination device ID of the activation code 131a, and loads an OS program from the storage device 300a. The firmwares 151 and 151a then activate the OSs 152 and 152a by causing the CPU 111 to execute the loaded OS programs.

As thus described, when activating the virtual machines 150 and 150a, the controller 141 obtains the activation codes 131 and 131a stored in the activation code storage unit 130, and provides them to the virtual machines 150 and 150a.

When, terminating the procedure at steps S42 and S43 described above, the controller 141 may terminate the firmwares 151 and 151a. In addition, when terminating the procedure, the controller 141 may notify the management terminal device 11 of the reason for terminating the procedure (e.g., there exists no Virtual Function or activation code allocated).

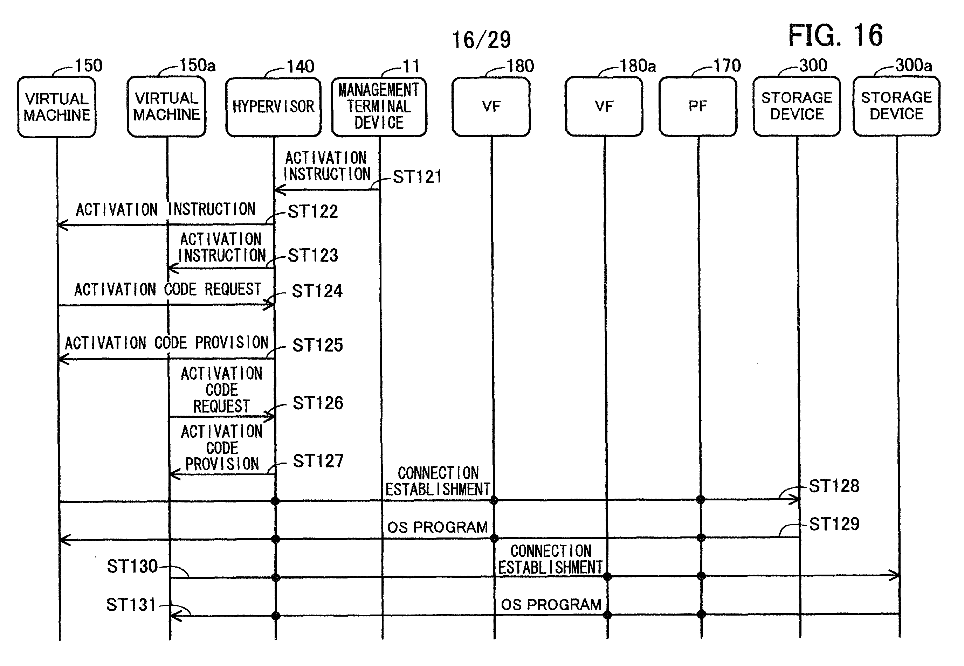

FIG. 16 is a sequence chart illustrating the virtual machine activation procedure of the second embodiment. In the following, the procedure illustrated in FIG. 16 will be described in the order of step numbers.

(Step ST121) The management terminal device 11 transmits a virtual machine activation instruction to the hypervisor 140. It is assumed that the virtual machine activation instruction includes information specifying the virtual machines 150 and 150a.

(Step ST122) Upon receiving the virtual machine activation instruction, the hypervisor 140 detects that the virtual machines 150 and 150a are specified. The hypervisor 140 then checks that the Virtual Function 180 and the activation code 131 are associated with the virtual machine 150, referring to the activation management table 132 stored in the activation code storage unit 130. The hypervisor 140 then outputs an activation instruction to the virtual machine 150. Accordingly, execution of the firmware 151 is started on the server device 100, and activation of the virtual machine 150 is started.

(Step ST123) The hypervisor 140 checks that the Virtual Function 180a and the activation code 131a are associated with the virtual machine 150a, referring to the activation management table 132. The hypervisor 140 then outputs an activation instruction to the virtual machine 150a. Accordingly, execution of the firmware 151a is started on the server device 100, and activation of the virtual machine 150a is started.

(Step ST124) The virtual machine 150 makes a request to the hypervisor 140 for an activation code.

(Step ST125) The hypervisor 140 obtains the activation code 131 from the activation code storage unit 130, and provides it to the virtual machine 150.

(Step ST126) The virtual machine 150a makes a request to the hypervisor 140 for an activation code.

(Step ST127) The hypervisor 140 obtains the activation code 131a from the activation code storage unit 130, and provides it to the virtual machine 150a.

(Step ST128) The virtual machine 150 attempts to connect to the storage device 300 based on the access destination device ID indicated by the activation code 131. In this occasion, the hypervisor 140, referring to the activation management table 132, allocates the connection to the Virtual Function 180 and further associates the connection with the virtual port "0" of the Physical Function 170. In other words, the virtual machine 150 establishes connection to the storage device 300 via the Virtual Function 180 and the virtual port "0" of the Physical Function 170. The virtual machine 150 then makes a request to the storage device 300 for an OS program.

(Step ST129) The storage device 300 transmits the OS program to the virtual machine 150. The hypervisor 140 associates the OS program received via the virtual port "0" of the Physical Function 170 with the Virtual Function 180, and outputs the OS program to the virtual machine 150. Upon receiving the OS program, the virtual machine 150 activates the OS 152.

(Step ST130) The virtual machine 150a attempts to connect to the storage device 300a, based on the access destination device ID indicated by the activation code 131a. In this occasion, the hypervisor 140, referring to the activation management table 132, allocates the connection to the Virtual Function 180a, and further associates the connection with the virtual port "1" of the Physical Function 170. In other words, the virtual machine 150a establishes connection to the storage device 300a via the Virtual Function 180a and the virtual port "1" of the Physical Function 170. The virtual machine 150a then makes a request to the storage device 300a for an OS program.

(Step ST131) The storage device 300a transmits the OS program to the virtual machine 150a. The hypervisor 140 associates the OS program received via the virtual port "1" of the Physical Function 170 with the Virtual Function 180a, and outputs the OS program to the virtual machine 150.a. Upon receiving the OS program, the virtual machine 150a activates the OS 152a.

As thus described, the hypervisor 140 manages the correspondence relation among the virtual machines 150 and 150a, the Virtual Functions 180 and 180a, the virtual port of the Physical Function 170, and the activation codes 131 and 131a, according to the activation management table 132. The hypervisor 140 then provides, when activating the virtual machines 150 and 150a, the activation codes 131 and 131a stored in the activation code storage unit 130 to the virtual machines 150 and 150a, in place of the activation code 161 stored in the activation code storage unit 160 on the Fibre Channel interface 106.

Accordingly, the virtual machines 150 and 150a are capable of establishing connection to the storage devices 300 and 300a, using individual activation codes 131 and 131a. Specifying different storage devices by the activation codes 131 and 131a as access destinations allows OS programs to be loaded from individual storage devices and allows the individual OS programs to be activated on the virtual machines 150 and 150a. In other words, the storage devices 300 and 300a to be accessed at activation of the OS program may be switched for each of the virtual machines 150 and 150a.

In the description of FIG. 9, an example of associating the activation codes 131 and 131a with the virtual machine 150 has been illustrated. In the case of the above setting, it is set for example in the firmware 151, and instructed from the firmware 151 to the hypervisor 140 at activation of the virtual machine 150, as to which of the activation codes 131 and 131a will be used for activating the virtual machine 150. In this manner, it becomes possible to select the OS to be activated on the virtual machine 150 at activation of the virtual machine 150.

In addition, although the foregoing description has mainly explained about activating the OS program, activation is not limited to that of the OS program. For example, when activating a predetermined application other than the OS, it is also possible to switch the storage device from which the application program is loaded for each virtual machine.

### [Third Embodiment]

Next, a third embodiment will be described. Mainly the difference from the aforementioned second embodiment will be described, omitting explanation of similar matters.

The second embodiment has exemplified a method of allocating a Physical Function and Virtual Functions on a single Fibre Channel interface to a plurality of virtual machines implemented on a single CPU board.

Here, there may be a plurality of CPU boards and a plurality of Fibre Channel interfaces provided on the server device 100. In such a case, associating virtual machines, Physical Functions and Virtual Functions with each other between a single CPU board and a single Fibre Channel interface may be performed similarly to the second embodiment. On the other hand, Virtual Functions may be allocated from a plurality of Fibre Channel interfaces to a plurality of virtual machines on a single CPU board. Therefore, in the third embodiment, a method will be described, which allocates Virtual Functions from different Fibre Channel interfaces to respective virtual machines in a server device including a plurality of CPU boards and a plurality of Fibre Channel interfaces.

The overall configuration of the information system of the third embodiment is similar to the overall configuration of the information system of the second embodiment described in FIG. 2, and therefore description thereof will be omitted.

In addition, the hardware configuration of the server device of the third embodiment is similar to the hardware configuration of the server device 100 of the second embodiment described in FIG. 3, and therefore description thereof will be omitted (respective components are provided with the same reference numerals as the server device 100). However, the server device 100 of the third embodiment further includes a CPU board 101a and a Fibre Channel interface 106a. The hardware configuration of the CPU board 101a is similar to that of the CPU board 101. The hardware configuration of the Fibre Channel interface 106a is similar to that of the Fibre Channel interface 106.

Furthermore, the hardware configuration of the Fibre Channel switching device of the third embodiment is similar to the hardware configuration of the Fibre Channel switching device 200 of the second embodiment described in FIG. 4, and therefore description thereof will be omitted (respective components are provided with the same reference numerals as the Fibre Channel switching device 200).

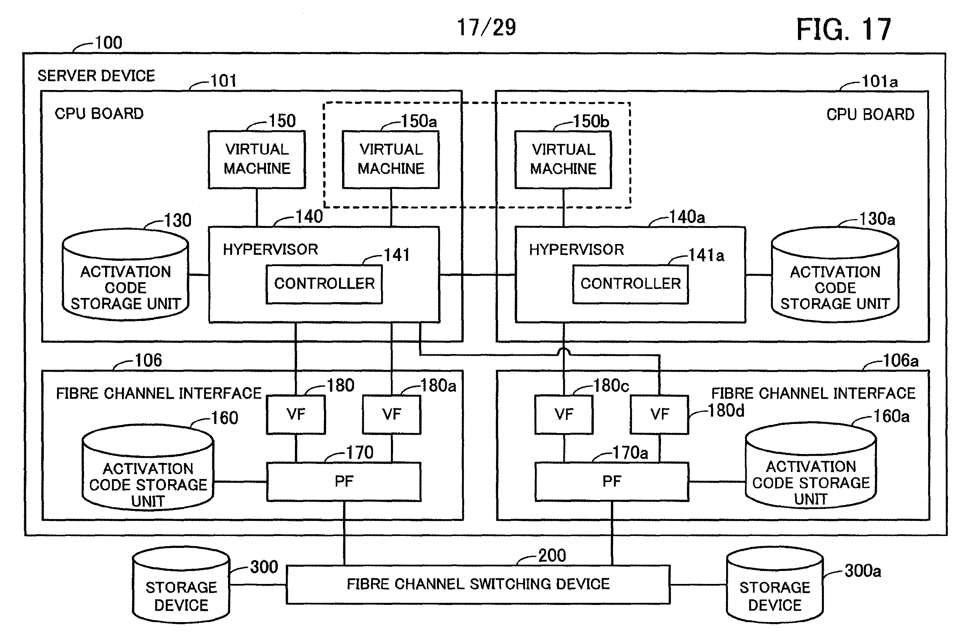

FIG. 17 is a block diagram illustrating functions of the server device of the third embodiment. The server device 100 has activation code storage units 130 and 130a, hypervisors 140 and 140a, virtual machines 150, 150a and 150b, activation code storage units 160 and 160a, Physical Functions 170 and 170a, and Virtual Functions 180, 180a, 180c and 180d.

The activation code storage unit 130, the hypervisor 140, and the virtual machines 150 and 150a are realized on the server device 100 by the CPU 111 executing a predetermined program. The activation code storage unit 130a, the hypervisor 140a, and the virtual machine 150b are realized on the server device 100 by a CPU on the CPU board 101a executing a predetermined program. The activation code storage unit 160, the Physical Function 170, and the Virtual Functions 180 and 180a are realized on the server device 100 by the Fibre Channel controller 114 executing a predetermined program. The activation code storage unit 160a, the Physical Function 170a, and the Virtual Functions 180c and 180d are realized on the server device 100 by a Fibre Channel controller on the Fibre Channel interface 106a executing a predetermined program. However, all or a part of the functions of the units may be realized by a dedicated hardware.

The activation code storage unit 130a corresponds to the activation code storage unit 130. The hypervisor 140a corresponds to the hypervisor 140. The hypervisor 140a has the controller 141a. The controller 141a corresponds to the controller 141.

The controllers 141 and 141a are communicable with each other. The controllers 141 and 141a synchronize the setting contents of the activation codes and the activation management tables stored in the activation code storage units 130 and 130a. The controllers 141 and 141a provide the activation codes with unique activation code identification information across the activation code storage units 160 and 160a as a whole.

The virtual machine 150b corresponds to the virtual machines 150 and 150a. Here, the virtual machine 150b forms, together with the virtual machine 150a, a single logical virtual machine. In other words, a single virtual machine is realized across CPU boards 101 and 101a, as a combination of the virtual machines 150a and 150b. The hypervisors 140 and 140a synchronize predetermined sets of data with each other, and allow the virtual machines 150a and 150b to be used from a client device as a single virtual machine.

The activation code storage unit 160a corresponds to the activation code storage unit 160. The Physical Function 170a corresponds to the Physical Function 170. The Physical Function 170a is connected to the Fibre Channel switching device 200.

The Virtual Functions 180c and 180d correspond to the Virtual Functions 180 and 180a. The Virtual Functions 180c and 180d are modules for data communication control generated by the Physical Function 170a. The virtual machines 150, 150a and 150b are capable of performing data communication with the external storage devices 300 and 300a by accessing the Virtual Functions 180c and 180d to share a single Physical Function 170a. In the third embodiment, illustration of the Virtual Function 180b of the Fibre Channel interface 106 is omitted (it is assumed that the Virtual Function 180b has been allocated or does not exist).

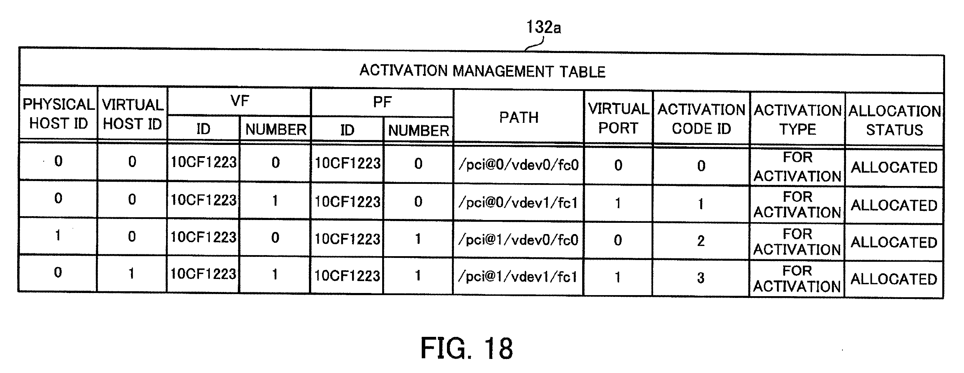

FIG. 18 illustrates an exemplary data structure of the activation management table of the third embodiment. The activation management table 132a corresponds to the activation management table 132. The contents to be set for respective columns are similar to the activation management table 132.

Here, let us consider a case where no Virtual Function is allocatable from the Physical Function 170, when activating the virtual machine 150a. An example thereof is a case where both the Virtual Functions 180 and 180a have been allocated to the virtual machine 150, and there exists no other unallocated Virtual Function on the Physical Function 170. The activation management table 132a indicates the setting of such a case.

Specifically, the Virtual Functions 180 and 180a (ID-number pair of the Virtual Function being "10CF1223-0" and "10CF1223-1") have been allocated to the virtual machine 150 (virtual host ID being "0") on the CPU board 101 (physical host ID being "0"). Both the Virtual Functions 180 and 180a are "for activation". Two types of activation codes "0" and "1" are associated with the Virtual Functions 180 and 180a, and the virtual machine 150 may be activated by selecting one of the activation codes at activation thereof.

In addition, the activation management table 132a also indicates the status of allocation to the virtual machine 150b. Specifically, the Virtual Function 180c (ID-number pair of the Virtual Function being "10CF1223-0") on the Physical Function 170a is allocated to the virtual machine 150b (virtual host ID being "0") on the CPU board 101a (physical host ID being "1"). In addition, the virtual port "0" of the Physical Function 170a is associated with the Virtual Function 180c. Furthermore, the activation code ID "2" is associated with the virtual machine 150b.

Upon receiving the Virtual Function allocation instruction specifying the Physical Function 170 with all the Virtual Functions on the Physical Function 170 having been allocated as described above, the controller 141 also detects the Physical Function 170a having the same ID, and allocates, to the virtual machine 150a, an unallocated Virtual Function 180d on the Physical Function 170a.

Specifically, the Virtual Function 180d (ID-number pair of the Virtual Function being "10CF1223-1") on the Physical Function 170a (ID-number pair of the Physical Function being "10CF1223-1") is allocated to the virtual machine 150a (virtual host ID being "1") on the CPU board 101 (physical host ID being "0"). In addition, the virtual port "1" of the Physical Function 170a is associated with the Virtual Function 180d. The linkage line between the hypervisor 140 and the Virtual Function 180d of FIG. 17 indicates the allocation relation. Furthermore, an activation code ID "3" is associated with the virtual machine 150a.

Next, processing procedure of the server device 100 having the aforementioned configuration will be described. Here, the steps of the overall procedure, the allocation release procedure, and the virtual machine activation procedure are similar to the steps of the overall procedure, allocation release procedure, and the virtual machine activation procedure of the second embodiment described in FIGS. 10, 13 and 15, and therefore description thereof will be omitted.

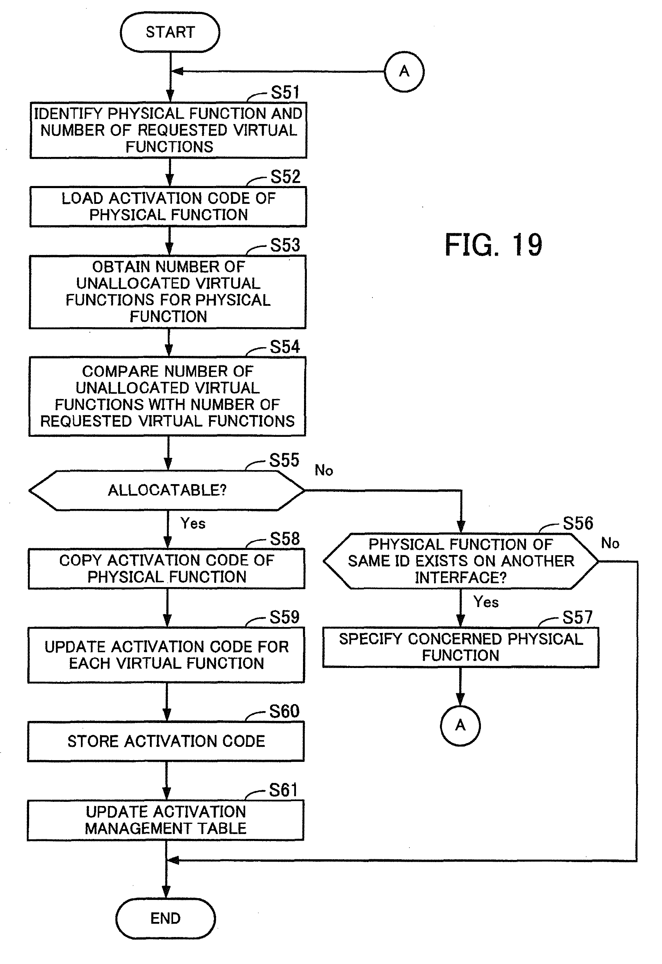

FIG. 19 is a flowchart illustrating the Virtual Function allocation procedure of the third embodiment. In the following, the procedure illustrated in FIG. 19 will be described in the order of step numbers.

(Step S51) The controller 141 obtains a Virtual Function allocation instruction. A Virtual Function allocation instruction includes information specifying a virtual machine, and a Physical Function to be allocated for activation and the number of Virtual Functions to be allocated (number of requested Virtual Functions), to the virtual machine. The controller 141 identifies, from the Virtual Function allocation instruction, the Physical Function and the number of requested Virtual Functions.

(Step S52) The controller 141 checks, from the identified Physical Function, the number of Virtual Functions arranged on the Physical Function, and loads the activation code.

(Step S53) The controller 141 obtains the number of unallocated Virtual Functions for the Physical Function, referring to the activation management table 132a stored in the activation code storage unit 130.

(Step S54) The controller 141 compares the number of unallocated Virtual Functions with the number of requested Virtual Functions.

(Step S55) The controller 141 determines, from the specified Physical Function, whether or not the requested number of Virtual Functions are allocatable. When the Virtual Functions are allocatable, the process flow proceeds to step 558. When not allocatable, the process flow proceeds to step S56.

(Step S56) The controller 141 determines whether or not there exists a Physical Function having the same ID on another Fibre Channel interface, referring to the activation management table 132a. When a Physical Function having the same ID exists, the process flow proceeds to step S57. When it does not exist, the controller 141 notifies the management terminal device 11 that allocation of a Virtual Function is impossible, and terminates the procedure. For example, there exists the Physical Function 170a as a Physical Function having the same ID ("10CF1223") as the Physical Function 170. The controller 141 performs the determination of step S56 except for the Physical Functions which have been subjected to the procedure of steps S51 to S55.

(Step S57) The controller 141 changes the specification of the Physical Function in the Virtual Function allocation instruction obtained at step S51 to the Physical Function detected at step S56. As a result, another Physical Function (e.g., Physical Function 170a in place of Physical Function 170) is to be specified in the Virtual Function allocation instruction. The process flow then proceeds to step S51. The controller 141 deletes the activation code obtained at step S52.

(Step S58) The controller 141 copies the activation code loaded from the Physical Function at step S52 as many as the number of requested Virtual Functions. The controller 141 provides the copied activation codes with activation code IDs.

(Step S59) The controller 141 updates the setting contents of the access destination device ID of the activation code for each Virtual Function, according to an instruction from the management terminal device 11.

(Step S60) Upon receiving a complete-editing instruction from the management terminal device 11, the controller 141 stores the changed activation code in the activation code storage unit 130. The controller 141 then transmits the stored activation code also to the controller 141a, causes the activation code storage unit 130a to store the activation code, and synchronizes the activation codes.

(Step S61) The controller 141 updates the activation management table 132a. The controller 141 transmits the contents of updating also to the controller 141a so as to update the activation management table stored in the activation code storage unit 130a, and synchronizes the activation management tables.

As thus described, even when the controller 141 is not capable of allocating a Virtual Function from a specified Physical Function upon receiving the Virtual Function allocation instruction, the controller 141 may detect, and allocate to the virtual machine, an unallocated Virtual Function from the Physical Function, provided that there exists another Physical Function having the same ID. The reason for detecting a Physical Function having the same ID is because it is considered that the ID indicates an ID allocated to a device, and the same ID indicates a Physical Function of the same functionality. In other words, when no Virtual Function is allocated from the Physical Function specified by the Virtual Function allocation instruction, the controller 141 attempts to allocate a Virtual Function from another Physical Function having the same functionality as the Physical Function.

An access destination device ID and other setting information desired to be set to each Virtual Function may also be included in the Virtual Function allocation instruction. In such a case, the controller 141 may set, at step S59, an access destination device ID or the like specified in the Virtual Function allocation instruction in an activation code. Accordingly, the administrator is relieved of the operation at step S59.

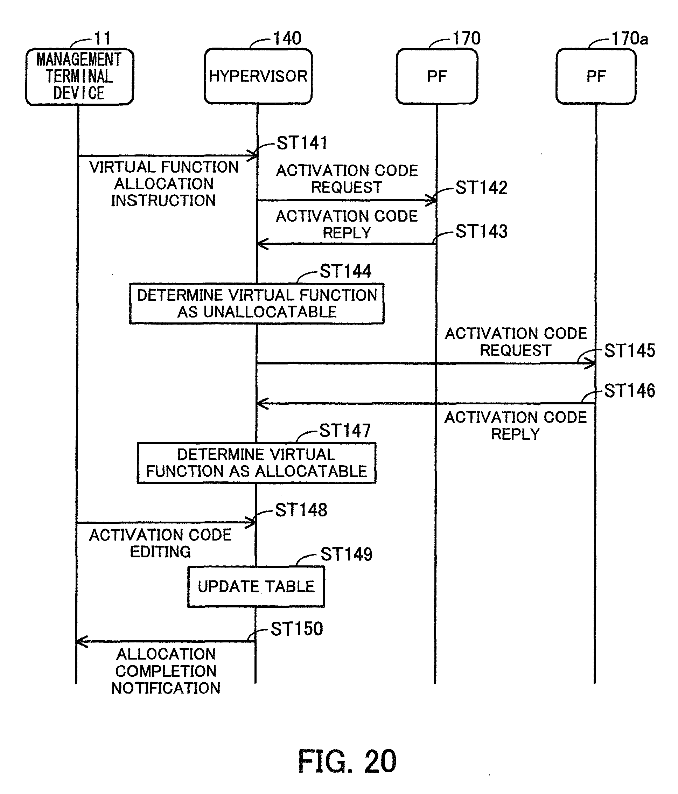

FIG. 20 is a sequence chart illustrating the Virtual Function allocation procedure of the third embodiment. In the following, the procedure illustrated in FIG. 20 will be described in the order of step numbers. It is assumed that, immediately before step ST141 described below, the Virtual Functions 180 and 180a have been allocated to the virtual machine 150 and the Virtual Function 180c has been allocated to the virtual machine 150b. It is also assumed that there exists no other unallocated Virtual Function in the Physical Function 170. In addition, it is assumed that the Virtual Function 180d is in an "unallocated" state in the activation management table 132a.

(Step ST141) The management terminal device 11 transmits a Virtual Function allocation instruction to the hypervisor 140. It is assumed that the Virtual Function allocation includes an instruction to allocate, to the virtual machine 150a, a single Virtual Function for activation from the Physical Function 170.

(Step ST142) Upon receiving the Virtual Function allocation instruction, the hypervisor 140 makes a request to the specified Physical Function 170 for transmission of an activation code 161.

(Step ST143) In response to the request from the hypervisor 140, the Physical Function 170 obtains the activation code 161 from the activation code storage unit 160 and outputs it to the hypervisor 140.

(Step ST144) The hypervisor 140 checks the number of Virtual Functions arranged on the Physical Function, based on the activation code 161. The hypervisor 140 determines that there exists no unallocated Virtual Function in the Physical Function 170 and it is impossible to newly allocate a Virtual Function from the Physical Function 170, referring to the activation management table 132a stored in the activation code storage unit 130.

(Step ST145) Upon detecting the Physical Function 170a having the same ID as the Physical Function 170, the hypervisor 140 makes a request to the Physical Function 170a for transmission of an activation code.

(Step ST146) In response to the request from the hypervisor 140, the Physical Function 170a obtains an activation code from the activation code storage unit 160a and outputs it to the hypervisor 140.

(Step ST147) The hypervisor 140 checks the number of Virtual Functions arranged on the Physical Function 170a, based on an activation code received from the Physical Function 170a. The hypervisor 140 determines that the Virtual Function 180d in the Physical Function 170a is unallocated and it is possible to allocate a Virtual Function, referring to the activation management table 132a.

(Step ST148) The hypervisor 140 provides the activation code received from the Physical Function 170a with an activation code ID "3" (since the number of requested Virtual Functions is one, the activation code need not be copied). In the following, the activation code provided with the activation code ID "3" will be denoted as the activation code 131a. The hypervisor 140 accepts editing of the activation code 131a from the management terminal device 11. For example, the WWN of the storage device 300a is set to the access destination device ID of the activation code 131a. Upon receiving an input of completion of editing by the administrator, the management terminal device 11 notifies the hypervisor 140 of the fact.

(Step ST149) The hypervisor 140 reflects the contents of editing to the activation code 131a, and stores the activation code 131a in the activation code storage unit 130. The hypervisor 140 sets the correspondence relation among the virtual machine 150a, the virtual port "0" of the Physical Function 170a, the Virtual Function 180d, and the activation code 131a in the activation management table 132a for activation. The hypervisor 140 communicates with the hypervisor 140a, and synchronizes the stored activation code 131a with the contents of updating of the activation management table 132a.

(Step ST150) The hypervisor 140 notifies the management terminal device 11 of completion of allocation.

As thus described, even when there exists no unallocated Virtual Function in the specified Physical Function 170, the hypervisor 140 detects an unallocated Virtual Function from the Physical Function 170a having the same ID as the Physical Function 170, and associates the unallocated Virtual Function with the virtual machine 150a.

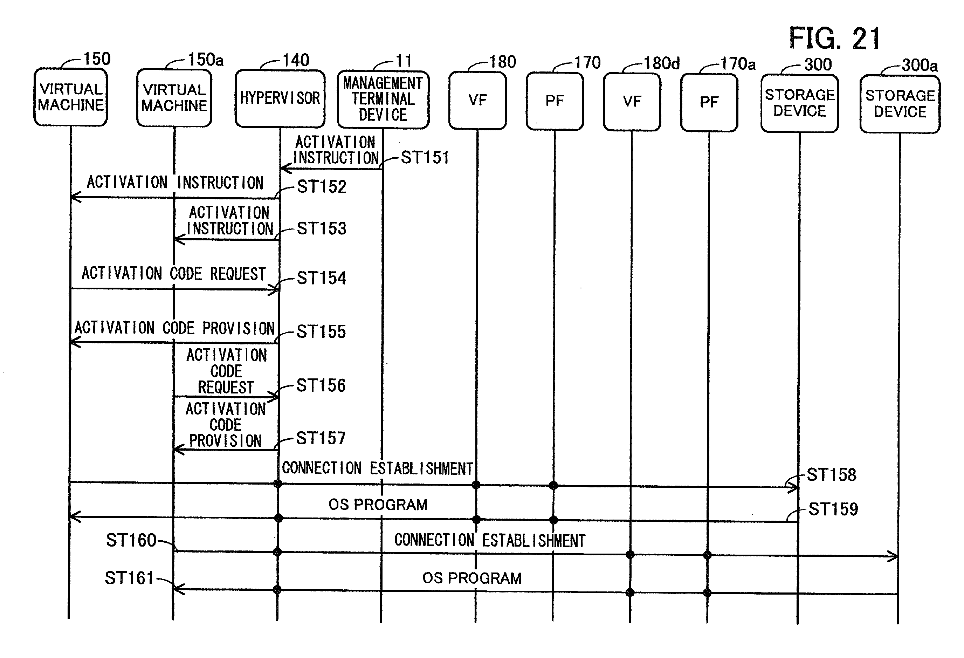

FIG. 21 is a sequence chart illustrating the virtual machine activation procedure of the third embodiment. In the following, the procedure illustrated in FIG. 21 will be described in the order of step numbers.

(Step ST151) The management terminal device 11 transmits a virtual machine activation instruction to the hypervisor 140. It is assumed that the virtual machine activation instruction includes information specifying the virtual machines 150 and 150a.

(Step ST152) Upon receiving the virtual machine activation instruction, the hypervisor 140 detects that the virtual machines 150 and 150a are specified. The hypervisor 140 then checks that the Virtual Functions 180 and 180a for activation and two activation codes including the activation code 131 are associated with the virtual machine 150, referring to the activation management table 132a stored in the activation code storage unit 130. The hypervisor 140 then outputs the activation instruction to the virtual machine 150. Accordingly, execution of the firmware 151 on the server device 100 is started.

(Step ST153) The hypervisor 140 checks that the Virtual Function 180d for activation and the activation code 131a are associated with the virtual machine 150a, referring to the activation management table 132a. The hypervisor 140 then outputs the activation instruction to the virtual machine 150a. Accordingly, execution of the firmware 151a on the server device 100 is started.

(Step ST154) The virtual machine 150 makes a request to the hypervisor 140 for an activation code. Here, two activation codes including the activation code 131 are associated with the virtual machine 150 in the activation management table 132a. The virtual machine 150 specifies the activation code 131 from the two codes and makes a request to the hypervisor 140 for the activation code 131. The activation code may be selected in the firmware of the virtual machine 150.

(Step ST155) The hypervisor 140 obtains the activation code 131 from the activation code storage unit 130, and provides it to the virtual machine 150.

(Step ST156) The virtual machine 150a makes a request to the hypervisor 140 for an activation code.

(Step ST157) The hypervisor 140 obtains the activation code 131a from the activation code storage unit 130, and provides it to the virtual machine 150a.

(Step ST158) The virtual machine 150 attempts to connect to the storage device 300, based on the access destination device ID indicated by the activation code 131. In this occasion, the hypervisor 140 allocates the connection to the Virtual Function 180, and further associates the connection with the virtual port "0" of the Physical Function 170, referring to the activation management table 132a. In other words, the virtual machine 150 establishes connection to the storage device 300 via the Virtual Function 180 and the virtual port "0" of the Physical Function 170. The virtual machine 150 then makes a request to the storage device 300 for an OS program.

(Step ST159) The storage device 300 transmits the OS program to the virtual machine 150. The hypervisor 140 associates the OS program received via the virtual port "0" of the Physical Function 170 with the Virtual Function 180, and outputs the OS program to the virtual machine 150. Upon receiving the OS program, the virtual machine 150 activates the OS 152.

(Step ST160) The virtual machine 150a attempts to connect to the storage device 300a, based on the access destination device ID indicated by the activation code 131a. In this occasion, the hypervisor 140 allocates the connection to the Virtual Function 180d, and further associates the connection with the virtual port "0" of the Physical Function 170a, referring to the activation management table 132a. In other words, the virtual machine 150a establishes connection to the storage device 300a via the Virtual Function 180d and the virtual port "0" of the Physical Function 170a. The virtual machine 150a then makes a request to the storage device 300a for an OS program.

(Step ST161) The storage device 300a transmits the OS program to the virtual machine 150a. The hypervisor 140 associates the OS program received via the virtual port "0" of the Physical Function 170a with the Virtual Function 180d, and outputs the OS program to the virtual machine 150a. Upon receiving the OS program, the virtual machine 150a activates the OS 152a.

As thus described, the hypervisor 140 is capable of allocating, to the virtual machines 150 and 150a on the CPU board 101, Virtual Functions from the Fibre Channel interfaces 106 and 106a. Accordingly, it is possible to enhance the degree of freedom of allocating Virtual Functions to respective virtual machines.

In addition, when it is impossible to allocate a Virtual Function to the virtual machine 150a from a specified Physical Function, there may exist the virtual machine 150b forming a single virtual machine together with the virtual machine 150a. In such a case, the Physical Function 170a associated with the virtual machine 150b may be selected with a higher priority to detect an unallocated Virtual Function.

### [Fourth Embodiment]

Next, a fourth embodiment will be described. Mainly the difference from the aforementioned second and third embodiments will be described, omitting explanation of similar matters.

In the second and third embodiments, an example has been illustrated in which the hypervisor manages the correspondence relation among virtual machines, Virtual Functions, virtual ports and activation codes of the Physical Function, according to the instruction from the management terminal device 11. On the other hand, the switching device 200 may perform the management. In such a case, the administrator may operate the management terminal device 21 and instruct activation of the virtual machine via the Fibre Channel switching device 200. In the fourth embodiment, such a function will be described.

Note that, the overall configuration of the information processing system of the fourth embodiment is similar to the overall configuration of the information processing system of the second embodiment described in FIG. 2, and therefore description thereof will be omitted. Here, the SVP 108 of the server device 100 and the SVP 203 of the Fibre Channel switching device 200 are connected by a management LAN (Local Area Network).

In addition, the hardware configuration of the server device of the fourth embodiment is similar to the hardware configuration of the server device 100 of the second embodiment described in FIG. 3, and therefore description thereof will be omitted (respective components are provided with the same reference numerals as the server device 100).

Furthermore, the hardware configuration of the Fibre Channel switching device of the fourth embodiment is similar to the hardware configuration of the Fibre Channel switching device 200 of the second embodiment described in FIG. 4, and therefore description thereof will be omitted (respective components are provided with the same reference numerals as the Fibre Channel switching device 200).

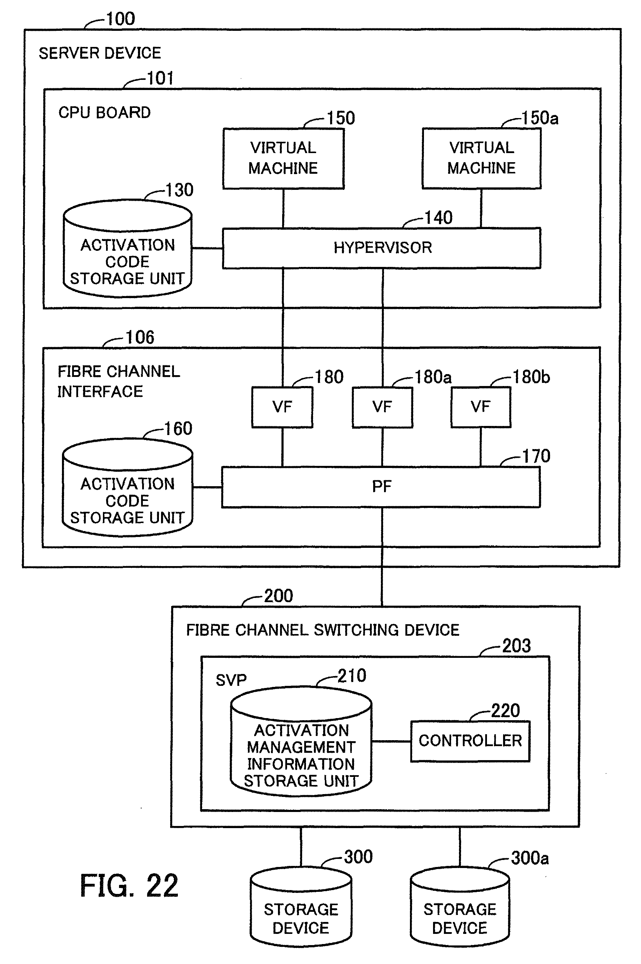

FIG. 22 is a block diagram illustrating functions of a Fibre Channel switching device of the fourth embodiment. The Fibre Channel switching device 200 has an activation management information storage unit 210 and a controller 220. The functions of the units are realized on the Fibre Channel switching device 200 by the SVP 203 executing a predetermined program. However, all or a part of the functions of the units may be implemented by a dedicated hardware.

The activation management information storage unit 210 stores the activation management table. An exemplary data structure of the activation management table is similar to the activation management table 132 described in FIG. 9.

Upon receiving the Virtual Function allocation instruction from the management terminal device 21, the controller 220 instructs to copy and edit the activation code for the hypervisor 140. In addition, the controller 220 updates the activation management table stored in the activation management information storage unit 210. Specifically, the controller 220 sets the correspondence relation among a newly allocated virtual machine, activation codes, the Virtual Functions 180, 180a and 180b, and the virtual port of the Physical Function 170 in the activation management table.

Next, processing procedure of the Fibre Channel switching device 200 having the aforementioned configuration will be described. Among the procedures performed by the controller 141 of the server device 100, the controller 220 performs the procedure relating to the activation management table.

Specifically, the controller 220 performs the overall procedure illustrated in FIG. 10. However, the step corresponding to step S11 is triggered by activation of the Fibre Channel switching device 200, and the step corresponding to step S19 is triggered by determination of whether or not to terminate the Fibre Channel switching device 200. The controller 220 receives the Virtual Function allocation instruction, the Virtual Function deallocation instruction, and the virtual machine activation instruction from the management terminal device 21.

In addition, the controller 220 performs the procedure of retrieving and updating the activation management table, among the Virtual Function allocation procedure, the allocation release procedure, and the virtual machine activation procedure illustrated in FIGS. 11, 13 and 15. In other words, the controller 220 makes a request to the controller 141 of the hypervisor 140 to copy and store the activation codes. In addition, the controller 220 makes a request to the controller 141 to activate virtual machines based on the activation codes. In this occasion, the controller 220 notifies the controller 141 of the correspondence relation among virtual machines, Virtual Functions, and virtual ports and activation codes of Physical Functions, referring to the activation management table stored in the activation management information storage unit 210.

In the following, the above-mentioned procedure of the controller 220 will be specifically described.

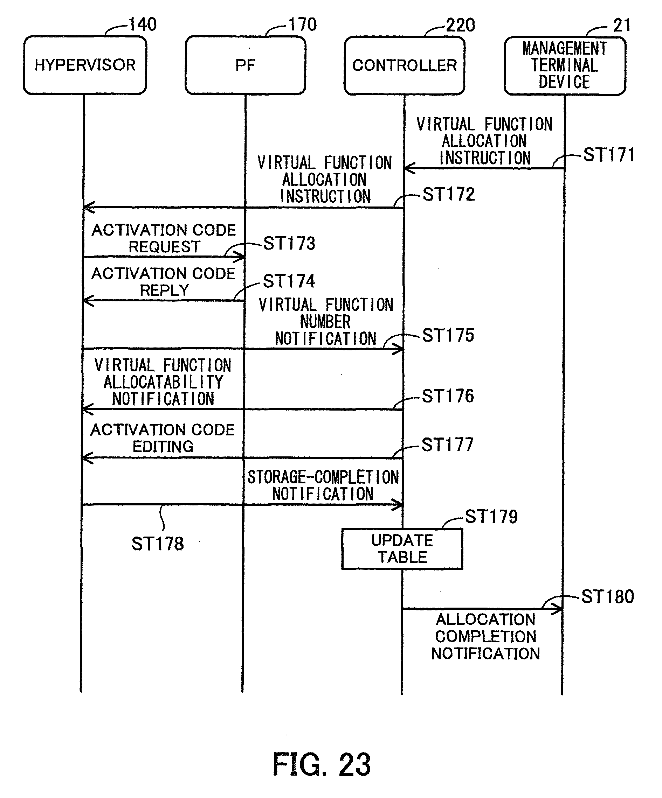

FIG. 23 is a sequence chart illustrating the Virtual Function allocation procedure of the fourth embodiment. In the following, the procedure illustrated in FIG. 23 will be described in the order of step numbers.

(Step ST171) The management terminal device 21 transmits a Virtual Function allocation instruction to the controller 220. It is assumed that the Virtual Function allocation instruction includes an instruction to allocate, to the virtual machine 150, a single Virtual Function for activation from the Physical Function 170. In addition, the Virtual Function allocation instruction may include information indicating other information (time setting, connection form, or the like) to be set to activation codes.

(Step ST172) Upon receiving the Virtual Function allocation instruction, the controller 220 outputs the Virtual Function allocation instruction to the hypervisor 140 via the SVP 108 of the server device 100.

(Step ST173) Upon receiving the Virtual Function allocation instruction, the hypervisor 140 makes a request to the specified Physical Function 170 for transmission of the number of Virtual Functions and the activation code 161.

(Step ST174) The Physical Function 170 obtains the number of Virtual Functions and the activation code 161 from the activation code storage unit 160, according to the request from the hypervisor 140, and outputs the number of Virtual Functions and the activation code 161 to the hypervisor 140.

(Step ST175) The hypervisor 140 checks the number of Virtual Functions arranged on the Physical Function 170, and notifies the controller 220 of the number.

(Step ST176) The controller 220 notifies the hypervisor 140 that the Virtual Function 180 of the Physical Function 170 has not been allocated and therefore is allocatable to the virtual machine 150, referring to the activation management table stored in the activation management information storage unit 210. The hypervisor 140 provides the obtained activation code 161 with an activation code ID, and generates the activation code 131 (since the number of requested Virtual Functions is one, copying thereof is unnecessary).

(Step ST177) The controller 220 edits the activation code 131, based on contents of setting instruction of the Virtual Function allocation instruction received at step ST171.

(Step ST178) The hypervisor 140 stores the activation code 131 in the activation code storage unit 130. The hypervisor 140 then transmits a storage-completion notification of the activation code 131 to the controller 220. The storage-completion notification includes the activation code ID of the activation code 131.

(Step ST179) Upon receiving the storage-completion notification, the controller 220 updates the activation management table stored in the activation management information storage unit 210. Specifically, the controller 220 sets the virtual machine 150, the Virtual Function 180, the virtual port "0" of the Physical Function 170, and the activation code 131 in association with each other in the activation management table.

(Step ST180) the controller 220 notifies the management terminal device 21 of Virtual Function allocation completion.

As thus described, the Fibre Channel switching device 200 holds the activation management table. The hypervisor 140 copies and stores the activation code according to the instruction from the controller 220.

Note that, at step ST177, editing by the administrator may be accepted from the management terminal device 21, similarly to the second and third embodiments.

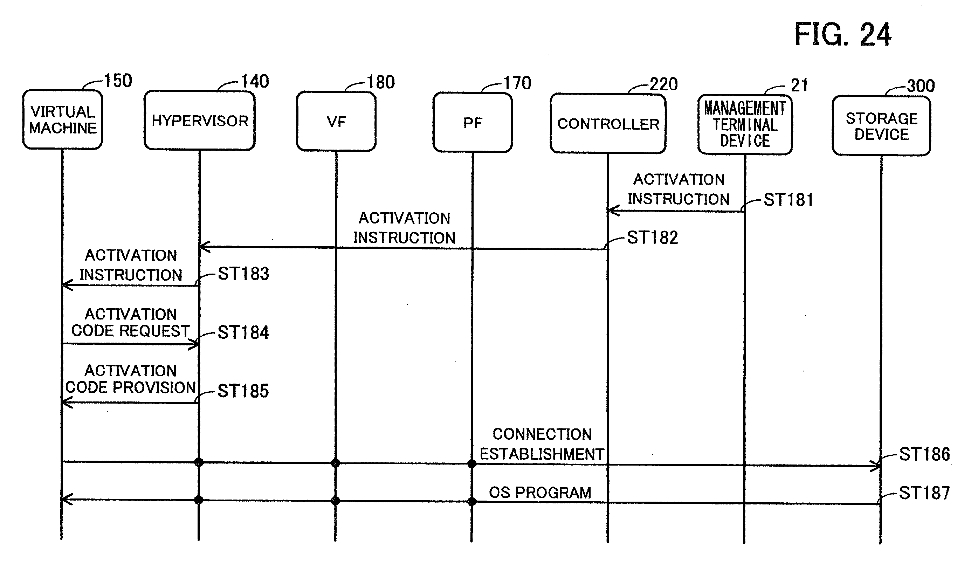

FIG. 24 is a sequence chart illustrating the virtual machine activation procedure of the fourth embodiment. In the following, the procedure illustrated in FIG. 24 will be described in the order of step numbers.

(Step ST181) The management terminal device 21 transmits a virtual machine activation instruction to the controller 220. It is assumed that the virtual machine activation instruction includes information specifying the virtual machine 150.

(Step ST182) Upon receiving the virtual machine activation instruction, the controller 220 transmits the virtual machine activation instruction to the hypervisor 140 via the SVP 108 of the server device. The controller 220 includes, in the virtual machine activation instruction to be transferred, information indicating the correspondence relation among the specified virtual machine 150, the Virtual Function 180, the virtual port "0" of the Physical Function 170, and the activation code 131. The controller 220 may obtain the correspondence relation, referring to the activation management table stored in the activation management information storage unit 210.

(Step ST183) Upon receiving the virtual machine activation instruction from the controller 220, the hypervisor 140 detects that the virtual machine 150 is specified. The hypervisor 140 outputs the activation instruction to the virtual machine 150. Accordingly, execution of the firmware 151 is started on the server device 100.

(Step ST184) The virtual machine 150 makes a request to the hypervisor 140 for an activation code.

(Step ST185) The hypervisor 140 obtains the activation code 131 from the activation code storage unit 130, based on the information of the correspondence relation included in the virtual machine activation instruction received at step ST183, and provides the activation code 131 to the virtual machine 150.

(Step ST186) The virtual machine 150 attempts to connect to the storage device 300, based on the access destination device ID indicated by the activation code 131. In this occasion, the hypervisor 140 allocates the connection to the Virtual Function 180, based on correspondence relation obtained from the controller 220, and further associates the connection with the virtual port "0" of the Physical Function 170. In other words, the virtual machine 150 establishes connection to the storage device 300 via the Virtual Function 180 and virtual port "0'" of the Physical Function 170. The virtual machine 150 then makes a request to the storage device 300 for an OS program.

(Step ST187) The storage device 300 transmits the OS program to the virtual machine 150. The hypervisor 140 associates the OS program received via the virtual port "0" of the Physical Function 170 with the Virtual Function 180, and outputs the OS program to the virtual machine 150. Upon receiving the OS program, the virtual machine 150 activates the OS 152.

As thus described, the Fibre Channel switching device 200 manages the activation management table in an integrated manner. When activating the virtual machine 150, the Fibre Channel switching device 200 transmits information relating to the activation code from the controller 220 of the Fibre Channel switching device 200 to the hypervisor 140. Although the activation procedure of the virtual machine 150 is described above, the same goes for the virtual machine 150a. For example, when it is desired to activate the virtual machine 150a from the storage device 300a, a correspondence relation for that purpose is preliminarily set in the activation management table stored in the activation management information storage unit 210. When activating the virtual machine 150a, the controller 220 obtains the correspondence relation as for the virtual machine 150a from the activation management table, and notifies the hypervisor 140 of the correspondence relation.

As thus described, managing the activation management table by the Fibre Channel switching device 200 in an integrated manner relieves each hypervisor of holding the activation management table. Accordingly, for example, communication load due to synchronization between the hypervisors as illustrated in the third embodiment may be reduced. In addition, for example, processing load associated with synchronization between respective hypervisors may be reduced.

### [Fifth Embodiment]

Next, a fifth embodiment will be described. Mainly the difference from the aforementioned second to fourth embodiments will be described, omitting explanation of similar matters.

In the second to the fourth embodiments, an example has been illustrated in which the Fibre Channel interface has a single Physical Function. On the other hand, there may be a case in which a single interface has a plurality of different Physical Functions. For example, an interface supporting communication of a plurality of standards (e.g., Fibre Channel and Ethernet (registered trademark)) using a single adapter may be considered. Such an interface may be referred to as CEE (Converged Enhanced Ethernet).

Therefore, in the fifth embodiment, there is described a method of allocating a Virtual Function to each virtual machine in a server device provided with a CEE interface having a plurality of Physical Functions.

The overall configuration of the information processing system of the fifth embodiment is similar to the overall configuration of the information processing system of the second embodiment described in FIG. 2. However, a CEE switching device 200a is used, which supports CEE in place of the Fibre Channel switching device 200.

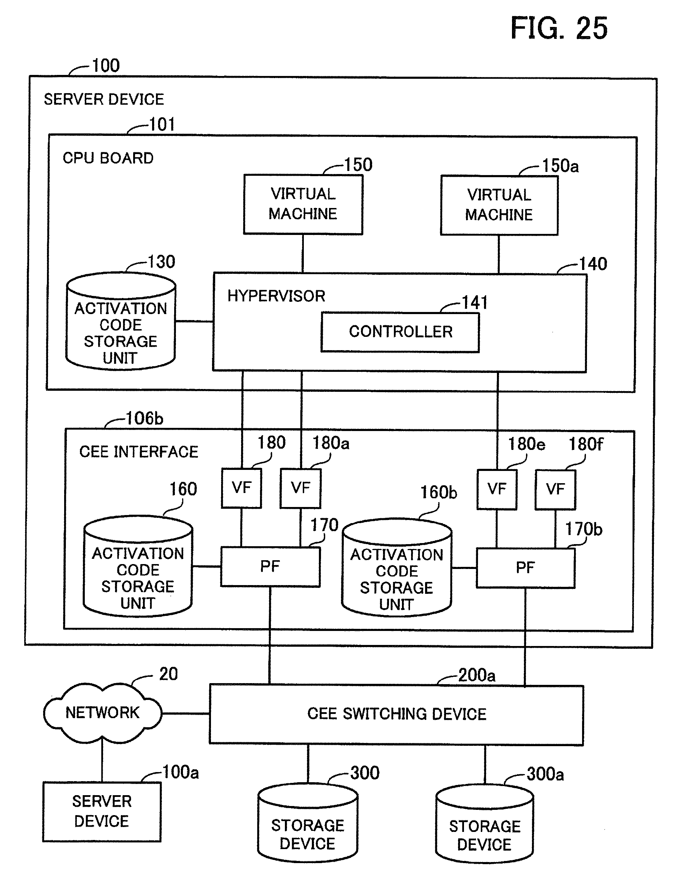

FIG. 25 is a block diagram illustrating functions of the server device of the fifth embodiment. Here, the CEE switching device 200a is connected to the server device 100a via a network 20. The network 20 is a LAN. The server device 100a, being connected to the network 20, is an information processing apparatus storing the OS program similarly to the storage devices 300 and 300a.

In addition, the hardware configuration of the server devices 100 and 100a is similar to the hardware configuration of the server device 100 of the second embodiment described in FIG. 3, and therefore description thereof will be omitted (respective components are provided with the same reference numerals as the server device 100). However, the server device 100 of the fifth embodiment is provided with a CEE interface 106b in place of the Fibre Channel interface 106. The CEE interface 106b has provided thereon a CEE controller for controlling communication using the Fibre Channel and Ethernet.

Furthermore, the hardware configuration of the CEE switching device 200a is similar to the hardware configuration of the Fibre Channel switching device 200 of the second embodiment described in FIG. 4. However, each of the ports, interface controllers, and routing controllers is capable of supporting the Fibre Channel and Ethernet.

The server device 100 has the activation code storage unit 130, the hypervisor 140, the virtual machines 150 and 150a, activation code storage units 160 and 160b, Physical Functions 170 and 170b, and the Virtual Functions 180, 180a, 180e and 180f.

The activation code storage unit 130, the hypervisor 140, and the virtual machines 150 and 150a correspond to the units having the same reference numerals in the second embodiment described in FIG. 7.

The activation code storage unite 160 and 160b, the Physical Functions 170 and 170b, and the Virtual Functions 180, 180a, 180e and 180f are realized on the server device 100 by the CEE controller executing a predetermined program. However, all or a part of the functions of the units may be realized by a dedicated hardware.

The activation code storage unit 160b corresponds to the activation code storage unit 160. The activation code storage unit 160b stores one of the default activation codes. The boot code stored in the activation code storage unit 160 is for Ethernet connection. Accordingly, the access destination device ID of the boot code specifies a connection destination device using a MAC (Media Access Control address) address or an IP (Internet Protocol) address, for example.

The Physical Function 170b is an interface for Ethernet connection. The Physical Function 170b is connected to the CEE switching device 200a.

The Virtual Functions 180e and 180f are virtual adapters for virtual machines to perform Ethernet connection. The Virtual Functions 180e and 180f are modules generated by the Physical Function 170b for data communication control. The virtual machines 150 and 150a share a single Physical Function 170b by accessing the Virtual Functions 180e and 180f. The Physical Function 170 and the Physical Function 170b, which share the CEE interface 106b on a virtual lane, are connected to the CEE switching device 200a. A virtual lane is a path provided by logically dividing the physical connection of a single interface. Accordingly, the Physical Function 170 is capable of data communication with external storage devices 300 and 300a by Fibre Channel connection via the CEE switching device 200a. In addition, the Physical Function 170b is capable of performing data communication with the external server device 100a via the CEE switching device 200a and network 20.

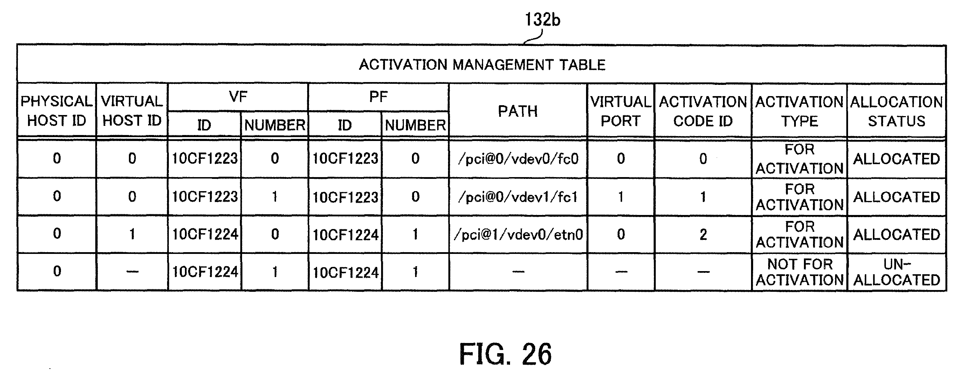

FIG. 26 illustrates an exemplary data structure of the activation management table of the fifth embodiment. The activation management table 132b corresponds to the activation management table 132. The contents to be set in respective columns are similar to the activation management table 132.

Here, let us consider a case in which it is desired that the virtual machine 150 activates the OS using the activation code stored in the storage device 300, and the virtual machine 150a activates the OS using the activation code stored in the server device 100a. In such a case, the virtual machine 150 is capable of Fibre Channel connection with the storage device 300 via the Physical Function 170. The virtual machine 150a is capable of Ethernet connection with the server device 100a via the Physical Function 170b. The activation management table 132b illustrates a setting of such a case.

Specifically, the Virtual Functions 180 and 180a (ID-number pairs of the Virtual Functions being "10CF1223-0" and "10CF1223-1") have been allocated to the virtual machine 150 (virtual host ID being "0") on the CPU board 101 (physical host ID being "0"). Both the Virtual Functions 180 and 180a are "for activation". Two types of activation code IDs having activation codes "0" and "1" are associated with each of the Virtual Functions 180 and 180a, allowing the virtual machine 150 to be activated by selecting one of the activation codes at the time of activation.

On the other hand, the Virtual Function 180e (ID-number pair of the Virtual Function being "10CF1224-0") on the Physical Function 170b (ID-number pair of the Physical Function being "10CF1224-1") is allocated to the virtual machine 150a (virtual host ID being "1"). The linkage line between the hypervisor 140 and the Virtual Function 180e of FIG. 25 indicates the allocation relation. Furthermore, the activation code ID "2" is associated with the virtual machine 150a. The part "etn0" of "/pci@1/vdev0/etn0" which has been set in the path column indicates that the Virtual Function 180e is for Ethernet connection.

Note that, in the activation management table 132b, the allocation status of the Virtual Function 180f (ID-number pair of the Virtual Function being "10CF1224-1") on the Physical Function 170b is also indicated. The Virtual Function 180f is in the allocation status "unallocated".

Next, processing procedure of the server device 100 having the aforementioned configuration will be described. Here, the steps of the overall procedure, the allocation release procedure, and the virtual machine activation procedure are similar to the steps of the overall procedure, allocation release procedure, and the virtual machine activation procedure of the second embodiment described in FIGS. 10, 13 and 15, and therefore description thereof will be omitted.

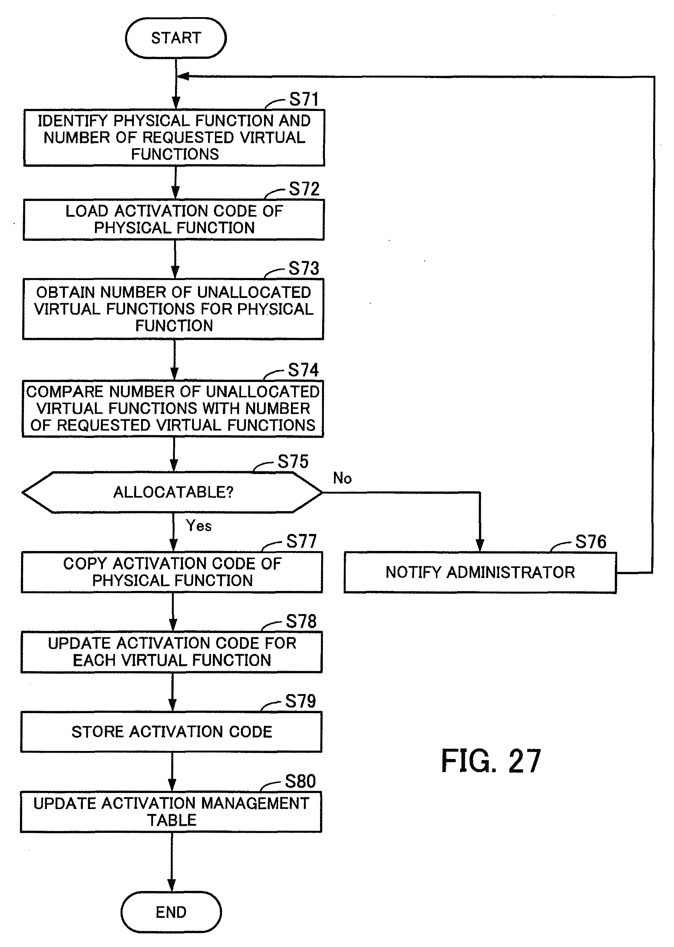

FIG. 27 is a flowchart illustrating the Virtual Function allocation procedure of the fifth embodiment. In the following, the procedure illustrated in FIG. 27 will be described in the order of step numbers.

(Step S71) The controller 141 obtains a Virtual Function allocation instruction. The Virtual Function allocation instruction includes information specifying a virtual machine, the Physical Function to be allocated to the virtual machine for activation, and the number of Virtual Functions to be allocated (number of requested Virtual Functions). For example, the Physical Function 170 is selected when it is desired to activate the virtual machine 150 using the OS program of the storage device 300. In addition, the Physical Function 170b is selected when it is desired to activate the virtual machine 150a using the OS program of the server device 100a. The controller 141 identifies the Physical Function and the number of requested Virtual Functions from the Virtual Function allocation instruction.

(Step S72) The controller 141 loads the activation code from the identified Physical Function, and checks the number of Virtual Functions arranged on the Physical Function.

(Step S73) The controller 141 obtains the number of unallocated Virtual Functions for the Physical Function, referring to the activation management table 132b.

(Step S74) The controller 141 compares the number of unallocated Virtual Functions with the number of requested Virtual Functions.

(Step S75) The controller 141 determines whether or not the number of requested Virtual Functions are allocatable from the specified Physical Function. When the Virtual Functions are allocatable, the process flow proceeds to step S78. When not allocatable, the process flow proceeds to step S76.

(Step S76) The controller 141 notifies the management terminal device 11 that Virtual Functions are not allocatable from the requested Physical Function. The administrator may check the notification and issue a Virtual Function allocation request again specifying another Physical Function.

(Step S77) The controller 141 copies the activation code loaded from the Physical Function at step S72 as many as the number of requested Virtual Functions. The controller 141 provides the copied activation codes with activation code IDs.

(Step S78) The controller 141 updates the setting contents of the access destination device ID of the activation code for each Virtual Function, according to the instruction from the management terminal device 11. For Fibre Channel connection, the access destination device ID is a WWN. For Ethernet connection, the access destination device ID is a MAC address or an IP address, for example.

(Step S79) Upon receiving a complete-editing instruction from the management terminal device 11, the controller 141 stores the changed activation code in the activation code storage unit 130.

(Step S80) The controller 141 updates the activation management table 132b.

As thus described, it is also possible, when using the CEE interface 106b, to generate an activation code for each Virtual Function in a similar manner, regardless of whether the connection is Fibre Channel connection or Ethernet connection.

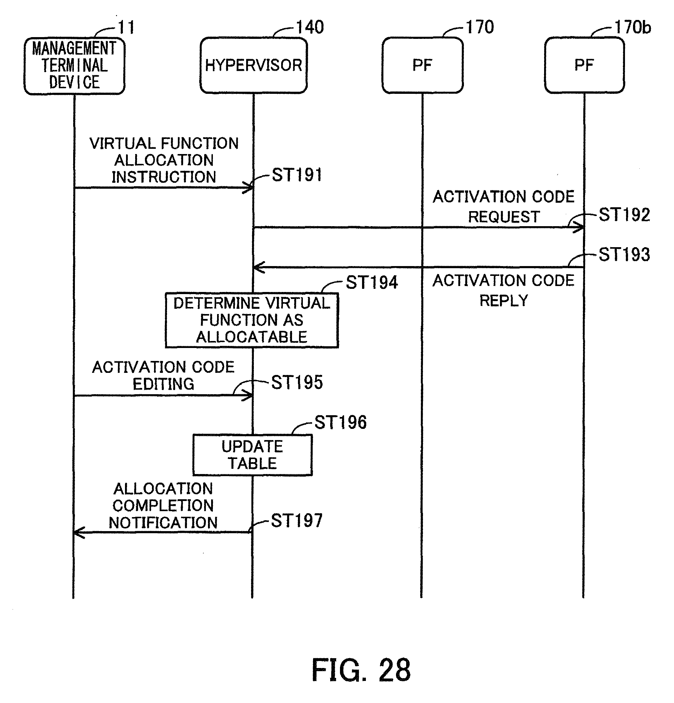

FIG. 28 is a sequence chart illustrating the Virtual Function allocation procedure of the fifth embodiment. In the following, the procedure illustrated in FIG. 28 will be described in the order of step numbers.

(Step ST191) The management terminal device 11 transmits the Virtual Function allocation instruction to the hypervisor 140. It is assumed that the Virtual Function allocation instruction includes an instruction to allocate, to the virtual machine 150a, a single Virtual Function for activation from the Physical Function 170b.

(Step ST192) The hypervisor 140 makes a request to the Physical Function 170b for an activation code.

(Step ST193) The Physical Function 170b obtains an activation code from the activation code storage unit 160b, according to the request from the hypervisor 140, and outputs the activation code to the hypervisor 140.

(Step ST194) The hypervisor 140 checks the number of Virtual Functions arranged on the Physical Function, based on the activation code received from the Physical Function 170b. The hypervisor 140 determines that the Virtual Function 180e in the Physical Function 170b has not been allocated and therefore a Virtual Function is allocatable, referring to the activation management table 132a. For determining which of the Virtual Functions 180e and 180f is to be allocated, the hypervisor 140 has rules preliminarily set therein, such as selecting unallocated Virtual Functions in the ascending order of identification information (ID-number pairs of Virtual Functions), for example.

(Step ST195) The hypervisor 140 provides the activation code received from the Physical Function 170b with an activation code ID "2" (since the number of requested Virtual Functions is one, the activation code need not be copied). In the following, the activation code provided with the activation code ID "2" will be denoted as the activation code 131a. The hypervisor 140 accepts editing of the activation code 131a from the management terminal device 11. For example, the MAC address or the IP address of the server device 100a is set to the access destination device ID of the activation code 131a. Upon receiving an input of completion of editing by the administrator, the management terminal device 11 notifies the hypervisor 140 of the fact.

(Step ST196) The hypervisor 140 reflects the contents of editing to the activation code 131a, and stores the activation code 131a in the activation code storage unit 130. The hypervisor 140 sets the correspondence relation among the virtual machine 150a, virtual port "0" of the Physical Function 170b, the Virtual Function 180e, and the activation code 131a in the activation management table 132b.

(Step ST197) The hypervisor 140 notifies the management terminal device 11 of completion of allocation.

As thus described, the hypervisor 140 allocates the Virtual Function 180e to the virtual machine 150a connected to the server device 100a via Ethernet using the CEE interface 106b.

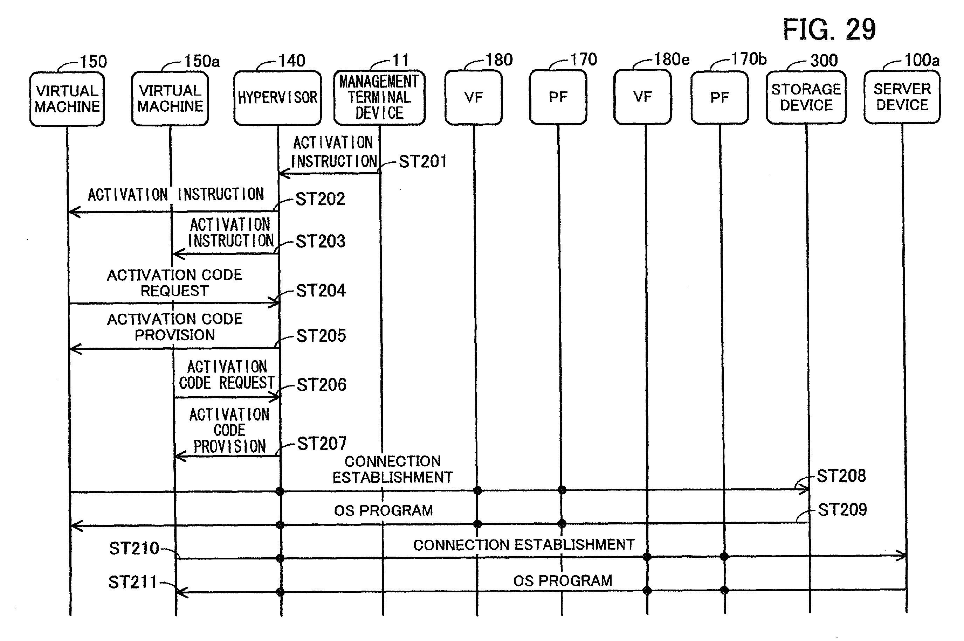

FIG. 29 is a sequence chart illustrating the virtual machine activation procedure of the fifth embodiment. In the following, the procedure illustrated in FIG. 29 will be described in the order of step numbers.

(Step ST201) The management terminal device 11 transmits a virtual machine activation instruction to the hypervisor 140. It is assumed that the virtual machine activation instruction includes information specifying the virtual machines 150 and 150a.

(Step ST202) Upon receiving the virtual machine activation instruction, the hypervisor 140 detects that the virtual machines 150 and 150a are specified. The hypervisor 140 then checks that the Virtual Functions 180 and 180a for activation and two activation codes including the activation code 131 are associated with the virtual machine 150, referring to the activation management table 132b stored in the activation code storage unit 130. The hypervisor 140 then outputs the activation instruction to the virtual machine 150. Accordingly, execution of the firmware 151 on the server device 100 is started.

(Step ST203) The hypervisor 140 checks that the Virtual Function 180e for activation and the activation code 131a are associated with the virtual machine 150a, referring to the activation management table 132b. The hypervisor 140 then outputs the activation instruction to the virtual machine 150a. Accordingly, execution of the firmware 151a on the server device 100 is started.

(Step ST204) The virtual machine 150 makes a request to the hypervisor 140 for an activation code. Here, two activation codes are associated with the virtual machine 150 in the activation management table 132a. The virtual machine 150 specifies the activation code 131 from the two codes and makes a request to the hypervisor 140 for the activation code 131.

(Step ST205) The hypervisor 140 obtains the activation code 131 from the activation code storage unit 130, and provides the activation code 131 to the virtual machine 150.

(Step ST206) The virtual machine 150a makes a request to the hypervisor 140 for an activation code.

(Step ST207) The hypervisor 140 obtains the activation code 131a from the activation code storage unit 130, and provides the activation code 131a to the virtual machine 150a.

(Step ST208) The virtual machine 150 attempts to connect to the storage device 300, based on the access destination device ID indicated by the activation code 131. In this occasion, the hypervisor 140 allocates the connection to the Virtual Function 180, and further associates the connection with the virtual port "0" of the Physical Function 170, referring to the activation management table 132b. In other words, the virtual machine 150 establishes Fibre Channel connection to the storage device 300 via the Virtual Function 180 and the virtual port "0" of the Physical Function 170. The virtual machine 150 then makes a request to the storage device 300 for an OS program.

(Step ST209) The storage device 300 transmits the OS program to the virtual machine 150. The hypervisor 140 associates the OS program received via the virtual port "0" of the Physical Function 170 with the Virtual Function 180, and outputs the OS program to the virtual machine 150. Upon receiving the OS program, the virtual machine 150 activates the OS 152.

(Step ST210) The virtual machine 150a attempts to connect to the server device 100a, based on the access destination device ID indicated by the activation code 131a. In this occasion, the hypervisor 140 allocates the connection to the Virtual Function 180e, and further associates the connection with the virtual port "0" of the Physical Function 170b, referring to the activation management table 132b. In other words, the virtual machine 150a establishes Ethernet connection to the server device 100a via the Virtual Function 180e and the virtual port "0" of the Physical Function 170b. The virtual machine 150a then makes a request to the storage device 300a for an OS program.

(Step ST211) The storage device 300a transmits the OS program to the virtual machine 150a. The hypervisor 140 associates the OS program received via the virtual port "0" of the Physical Function 170b with the Virtual Function 180e, and outputs the OS program to the virtual machine 150a. Upon receiving the OS program, the virtual machine 150a activates the OS 152a.

As thus described, the hypervisor 140 is capable of allocating, to the virtual machines 150 and 150a on the CPU board 101, Virtual Functions according to the communication standard desired to be connected from the different Physical Functions 170 and 170b on the CEE interface 106b. Accordingly, it is possible to enhance the degree of freedom of allocating Virtual Functions to respective virtual machines.

Note that, although the fifth embodiment describes Fibre Channel and Ethernet connection as an example, the same goes for connections using other communication standards. The SAS interface, Infiniband interface, PCI Express interface, for example, are conceivable as other communication standards supportable by the CEE interface 106b.

In addition, the second to fourth embodiments may similarly provide adapter switching control to the NIC interface, SAS interface, Infiniband interface, and PCI Express interface, without being limited to the Fibre Channel interface.

The foregoing merely illustrates the principle of present invention. Furthermore, various modifications and changes are possible by a person skilled in the art, the present invention are not limited to the exact configurations and applications described above, and all the corresponding modifications and equivalents are considered to be within the range of the present invention according to the accompanying claims and equivalents thereof.

### Reference Signs List

- 1: information processing apparatus
- 1a, 1b: virtual machine
- 1c: interface unit
- 1d: storage unit
- 1e: controller
- 2,2a: storage device
- 3, 3a, 3b: activation code

## Claims

1. An information processing apparatus on which a plurality of virtual machines is operable, comprising:
an interface unit which is able to access a plurality of storage devices storing programs, and holds a first activation code for reading a program from an access destination storage device, the first activation code including information indicating the access destination storage device among the plurality of storage devices;
a storage unit which stores a plurality of second activation codes, each including information indicating an access destination storage device among the plurality of storage devices, for reading a program from the access destination storage device via the interface unit; and
a controller which selects, when activating a program on one of the plurality of virtual machines, a second activation code according to the virtual machine from the storage unit, and provides the virtual machine with the selected second activation code in place of the first activation code.

2. The information processing apparatus according to claim 1, wherein the storage unit further stores management information associating at least one second activation code with each of the plurality of virtual machines, and
the controller selects a second activation code according to the virtual machine, based on the management information stored in the storage unit.

3. The information processing apparatus according to claim 1, wherein the plurality of second activation codes is generated using the first activation code held by the interface unit, and stored in the storage unit.

4. The information processing apparatus according to claim 1, wherein, when two or more second activation codes are associated with a single virtual machine, the controller selects one of the two or more second activation codes based on a notification from the virtual machine.

5. The information processing apparatus according to claim 1, wherein the controller communicates with another device storing management information indicating correspondence relation between the plurality of virtual machines and the plurality of second activation codes, and selects a second activation code according to the virtual machine.

6. The information processing apparatus according to claim 1, wherein the interface unit has two or more access units which are able to access the plurality of storage devices, and holds two or more first activation codes corresponding to the two or more access units, and
each of the plurality of second activation codes is generated using one of the two or more first activation codes held by the interface unit, and stored in the storage unit.

7. The information processing apparatus according to claim 1, wherein the program read from the access destination storage device is a program of an operating system.

8. The information processing apparatus according to claim 1, wherein the controller selects, in response to a request from a firmware executed on the virtual machine, a second activation code according to the virtual machine, and provides the firmware with the second activation code.

9. A virtual machine management method executed by an information processing apparatus on which a plurality of virtual machines is operable and which is able to access a plurality of storage devices storing programs, the virtual machine management method comprising:
detecting start of activation of a program on one of the plurality of virtual machines;
selecting, from a storage unit storing a plurality of first activation codes, each including information indicating an access destination storage device among the plurality of storage devices, for reading a program from the access destination storage device via an interface unit included in the information processing apparatus, a first activation code according to the virtual machine which detected the start of activation of the program; and
providing the virtual machine with the selected first activation code, in place of a second activation code held by the interface unit and including information indicating an access destination storage device among the plurality of storage devices for reading a program from the access destination storage device.

10. A virtual machine management program which causes a computer on which a plurality of virtual machines is operable and which is able to access a plurality of storage devices storing programs to perform a procedure comprising:
detecting start of activation of a program on one of the plurality of virtual machines;
selecting, from a storage unit storing a plurality of first activation codes, each including information indicating an access destination storage device among the plurality of storage devices, for reading a program from the access destination storage device via an interface unit included in the information processing apparatus, a first activation code according to the virtual machine which detected the start of activation of the program; and
providing the virtual machine with the selected first activation code, in place of a second activation code held by the interface unit and including information indicating an access destination storage device among the plurality of storage devices for reading a program from the access destination storage device.
